# EUROPÄISCHE PATENTSCHRIFT

(11) **EP 1 525 415 B1**
(45) Veröffentlichungstag und Bekanntmachung des Hinweises auf die Patenterteilung: **30.12.2009**
(21) Anmeldenummer: 03783969.3
(22) Anmeldetag: 26.05.2003
(51) Int. Cl.: F16K 1/44

(54) **VORRICHTUNG ZUM ANTRIEB F R DOPPELSITZVENTILE**
DEVICE FOR ACTUATING DOUBLE SEAT VALVES
DISPOSITIF DE COMMANDE DE SOUPAPES A DOUBLE SIEGE

(30) Priorität: 29.07.2002 DE 10234482
(43) Veröffentlichungstag der Anmeldung: 27.04.2005
(73) Patentinhaber: GEA Tuchenhagen GmbH, 21514 Büchen (DE)
(72) Erfinder: BURMESTER, Jens, 23883 Grambek (DE)
(74) Vertreter: Hauck Patent- und Rechtsanwälte
(86) Internationale Anmeldenummer: PCT/EP2003/005509
(87) Internationale Veröffentlichungsnummer: WO 2004/015314

(56) Entgegenhaltungen:
- EP-A- 0 545 846
- WO-A-97/22821
- DE-A- 3 133 273

## Beschreibung

### TECHNISCHES GEBIET

Die Erfindung betrifft eine Vorrichtung zum Antrieb für Doppelsitzventile, insbesondere für die Nahrungsmittel- und Getränkeindustrie, nach dem Oberbegriff des Anspruchs 1.

### STAND DER TECHNIK

Eine Vorrichtung der gattungsgemäßen Art ist aus der EP 0 868 619 B1 bekannt. Die dort in **Figur 6** dargestellte und in der zugeordneten Beschreibung kurz erläutert Vorrichtung ist zwar nicht Gegenstand der Patentansprüche dieser Druckschrift, die offenbarten Merkmale belegen jedoch, wie durch einfache Modifizierung der unter Schutz gestellten Antriebsvorrichtung 1 (Bezugszeichen der dortigen Figuren) ein Doppelsitzventil angetrieben werden kann, dessen unabhängig angetriebenes erstes Schließglied 4 als Schieberkolben mit radialen Dichtungsmitteln und dessen abhängig angetriebenes zweites Schließglied 5 als Sitzteller ausgebildet sind. Bei dieser Schließgliedkonfiguration vollzieht sich die Teiloffenstellung T1 des ersten Schließgliedes 4 in entgegengesetzter Richtung zum Öffnungshub H, der, bezogen auf die Darstellungslage des Ventils, nach oben gerichtet ist. Zur Realisierung der Teiloffenstellung T1 wird ein Hauptkolben 106 der Hauptverstelleinrichtung 1a von oben über einen nicht bezeichneten Druckmittelanschluss mit Druckmittel D2 beaufschlagt. Die Teilhubbegrenzung des ersten Schließgliedes 4 nach unten erfolgt dadurch, dass eine Ventilstange 104 über einen nicht näher bezeichneten Rezess oberhalb eines Federwiderlagers 119 an letzterem zur Anlage kommt. Die Teiloffenstellung T2 des abhängig angetriebenen zweiten Schließgliedes 5, das aufgrund seiner Ausbildung als Sitzteller nur einen Bewegungsfreiheitsgrad nach oben besitzt, erfolgt über einen Kolben 108, der über einen ersten Druckmittelanschluss 117 mit Druckmittel D3 beaufschlagt wird. Die Mitnahme einer mit dem zweiten Schließglied 5 verbundenen Hohlstange 105 nach oben erfolgt über ihren Hohlstangenkopf 105a. Die Teilhubbegrenzung des Kolbens 108 wird über einen zweiten Rezess 114a an der Anschlaghülse 114 realisiert.

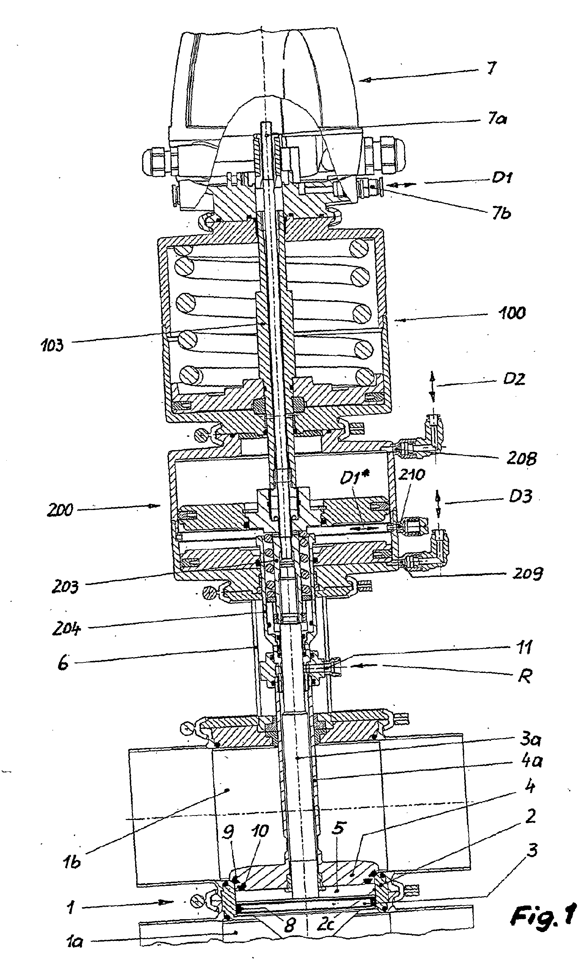

Der vorstehend kurz beschriebene Antrieb wird in Fachkreisen auch als sog. "integrierter" Antrieb bezeichnet, da er in einem gemeinsamen Gehäuse sowohl die Hauptverstelleinrichtung 1a für den vollen Öffnungshub H als auch die Einzelverstelleinrichtungen 1b, 1 c für die Teiloffenstellungen T1 und T2 beherbergt. Derartige Antriebe bauen in der Regel kompakt und sie erlauben es, wenn die Einzelverstelleinrichtungen 1 b, 1 c in der vorstehend beschriebenen Weise in Bezug auf die Hauptverstelleinrichtung 1a angeordnet sind, einen sog. Rückmelde- und/oder Steuerkopf 8 (**Figur 1**) unmittelbar oberhalb der Hauptverstelleinrichtung 1 a anzuordnen.

Aus der Tatsache, dass integrierte Antriebe für die maximal möglichen Anforderungen, die an Doppelsitzventile der in Rede stehenden Art gestellt werden, ausgelegt sind, erwächst auch ihr wesentlicher Nachteil. Maximale Anforderungen sind dann gegeben, wenn neben dem vollen Öffnungshub H, der durch die Hauptverstelleinrichtung realisiert wird, gegenläufige Teiloffenstellungen T1, T2 der beiden Schließglieder zur Durchführung der jeweiligen Sitzreinigung erforderlich sind, die durch jeweils eine dem zu betätigenden Schließglied zugeordnete Einzelverstelleinrichtung ausgeführt werden. Da ein Großteil der in Anlagen der Nahrungsmittel- und Getränkeindustrie eingesetzten Doppelsitzventile ohne die Möglichkeit oder die Notwendigkeit der Sitzreinigung zur Anwendung kommen, da lediglich Vermischungssicherheit gefordert wird, sind integrierte Antriebe, bei denen nur die Hauptverstelleinrichtung aktiviert ist, in der Regel zu aufwändig und damit unwirtschaftlich. Für derartige Anwendungsfälle wird dann in der Praxis auf "normale" Antriebe (Standardantriebe) für Doppelsitzventile zurückgegriffen, die lediglich eine Hauptverstelleinrichtung für die volle Offenstellung H beherbergen. Dadurch reduzieren sich dann die jeweiligen Stückzahlen für integrierte Antriebe eines Herstellers von Doppelsitzventilen, da jedes Doppelsitzventil entsprechend den gestellten Anforderungen allenfalls mit einem hierfür geeigneten Antrieb ausgerüstet ist, und es ergeben sich dadurch für integrierte Antriebe ggf. unwirtschaftliche Fertigungsstückzahlen.

Ein weiterer integrierter Antrieb für ein Doppelsitzventil der gattungsgemäßen Art ist aus der EP 1 030 988 B1 bekannt. Die Kinematik dieses Antriebes entspricht in identischer Weise jenem gemäß **Figur 6** in der EP 0 868 619 B1**.** Im Unterschied zu letzterem wird bei ersterem die der vollen Öffnungsbewegung H gegenläufige Teilhubbewegung T1 des unabhängig angetriebenen, als Schieberkolben ausgebildeten ersten Schließgliedes durch einen separaten dritten Arbeitskolben 30 realisiert, der oberhalb des ersten Arbeitskolbens 18, der den vollen Öffnungshub H bewirkt, angeordnet ist. Die Gesamtanordnung wird dadurch zwar aufwändiger, jedoch wird durch den oberhalb des dritten Arbeitskolbens 30 geschaffenen separaten dritten Druckraum 39 das zu dessen Beaufschlagung mit Druckmittel notwendige Volumen deutlich gegenüber dem entsprechenden Druckraum oberhalb des Hauptkolbens im Antrieb des Doppelsitzventils gemäß EP 0 868 619 B1 reduziert, wodurch beim Schalten der zugeordneten Teilhubbewegung T1 weniger Druckmittel verbraucht wird und der Antrieb schneller auf den diesbezüglichen Schaltbefehl reagiert. Gleichwohl ist auch der integrierte Antrieb gemäß EP 1 030 988 B1 wiederum relativ aufwändig aufgebaut und mit den vorstehend im Zusammenhang mit dem integrierten Antrieb gemäß EP 0 868 619 B1 kurz dargelegten weiteren Nachteilen behaftet.

In der DE 31 33 273 C2 wurde für ein reinigbares Doppelsitzventil mit Leckkontrolle bereits vorgeschlagen, die Einzelverstelleinrichtungen unterhalb der ausschließlich den Vollhub für die volle Offenstellung erzeugenden Hauptverstelleinrichtung als eigenständige Verstelleinrichtung ohne Änderung der angrenzenden Standardbauteile additiv zwischen Hauptverstelleinrichtung und einem Laternengehäuse einzufügen. Allerdings handelt es sich dabei um ein Doppelsitzventil, das zwei als Sitzteller ausgebildete Schließglieder aufweist, so dass der Vollhub H für die volle Offenstellung und die beiden Teilhubbewegungen T1, T2 zum spaltweiten Entfernen der Schließglieder von ihrer jeweiligen Sitzfläche gleichgerichtet sind. Die mit diesem sog. "modularen" Antriebskonzept erzielbaren Vorteile bestehen insbesondere darin, dass ein weitestgehend standardisiertes Doppelsitzventil, das über einen Standardantrieb für die Erzeugung der vollen Offenstellung verfügt, durch additives Einfügen von relativ einfachen Einzelverstelleinrichtungen Sonderfunktionen im Hinblick auf die vorstehend beschriebene Erzeugung von Teiloffenstellungen der beiden Schließglieder erhält. Der DE 31 33 273 C2 sind keinerlei Hinweise zu entnehmen, ob das bekannte modulare Antriebskonzept auf Doppelsitzventile der einleitend gekennzeichneten Gattung anwendbar ist und schon gar nicht, wie eine derartige Lösung aussehen könnte.

Das abhängig angetriebene Schließglied des Doppelsitzventils, das mit seinen beiden Dichtungen auch als Doppelteller bezeichnet wird, ist zwar bei der Sitzreinigung hinsichtlich seiner Teiloffenstellung T2 unkritisch und kann daher zum Vollzug der zugeordneten Sitzreinigungsstellung gegen einen festen Anschlag gefahren werden. Dieser Anschlag bedarf daher keiner aufwändigen Voreinstellung oder Nachjustierung. In der Regel steht bei der Sitzreinigung Reinigungsmittel unter Druck am abhängig angetriebenen Schließglied an, so dass dieses gegen die aus dem jeweiligen Druck und der zugeordneten wirksamen Fläche dieses Schließgliedes resultierende Schließkraft um den Teilhub T2 geöffnet werden muss. Zur Überwindung dieser Schließkraft bzw. Niederhaltekraft ist die zugeordnete zweite Einzelverstelleinrichtung entsprechend zu dimensionieren. Entweder ist eine hinreichend große Kolbenfläche des Antriebskolbens in dieser zweiten Einzelverstelleinrichtung vorzusehen oder aber es ist, falls hinsichtlich der Abmessung des Durchmessers des Antriebskolbens Restriktionen bestehen, der Druck des den Antriebskolben beaufschlagenden Druckmittels entsprechend anzuheben. Eine Anpassung des Antriebs an bestehende Druckverhältnisse über eine entsprechende Dimensionierung des Antriebskolbens ist immer in erster Linie eine Kostenfrage und wird in der Regel nur gewählt, wenn andere Möglichkeiten nicht zur Verfügung stehen. Die Wahl eines höheren Druckes des Druckmittels wird in der Regel präferiert; sie scheidet in der Praxis jedoch immer dann aus, wenn in der Anlage bzw. dem Betrieb, in dem das sitzreinigungsfähige Doppelsitzventil installiert ist, ein diesbezügliches Druckniveau nicht vorhanden oder aus Kostengründen zusätzlich nicht geschaffen werden kann.

Aufgabe der vorliegenden Erfindung ist es, eine Vorrichtung der gattungsgemäßen Art derart zu gestalten, dass sie möglichst einfach aufgebaut und an die unterschiedlichen Anforderungen, die an ein Doppelsitzventil der in Rede stehenden Art gestellt werden (nur voller Öffnungshub oder voller Öffnungshub sowie Sitzreinigungsteilhübe), leicht und kostengünstig anpassbar ist.

Darüber hinaus soll im Rahmen einer vorteilhaften Ausgestaltung der vorgeschlagenen Vorrichtung eine größere Flexibilität in der Anpassung der zweiten Einzelverstelleinrichtung für die Teilhubbewegung des abhängig angetriebenen Schließgliedes an vorhandene Drücke des Druckmittels sichergestellt werden.

### ZUSAMMENFASSUNG DER ERFINDUNG

Die Aufgabe wird durch die Merkmale des Anspruchs 1 gelöst. Vorteilhafte Ausführungsformen der vorgeschlagenen Vorrichtung sind Gegenstand der Unteransprüche.

Ein auf der Hand liegender erster Vorteil der vorgeschlagenen Lösung besteht darin, dass erstmals eine Lösung offenbart wird, wie die Bewegungskinematik eines sitzreinigungsfähigen Doppelsitzventils der in Rede stehenden Art mit einem modularen Antriebskonzept, bei dem die Hauptverstelleinrichtung aus einem Standardantrieb besteht und die Einzelverstelleinrichtungen eigenständig ausgebildet und zwischen Standardantrieb und dem Ventilgehäuse bzw. einem mit diesem verbundenen Laternengehäuse eingefügt sind, realisiert wird. Damit ist es nunmehr möglich, sitzreinigungsfähige und nicht sitzreinigungsfähige Doppelsitzventile mit dem gleichen Standardantrieb für die volle Öffnungsbewegung des Ventils auszustatten. Dadurch sind einerseits die besten Voraussetzungen für eine wirtschaftliche Fertigungsstückzahl derartiger Standardantriebe gegeben und andererseits werden bei jedem Doppelsitzventil nur die jeweils erforderlichen Antriebsteile eingesetzt.

Darüber hinaus ermöglicht es der Vorschlag, die Sonderfunktionen, nämlich die Realisierung der Teilhubbewegung T1, T2 der beiden Schließglieder zum Zwecke ihrer Sitzreinigung mittels eigenständiger Einzelverstelleinrichtungen, wirtschaftlich vertretbar sowohl bei Erstausrüstungen von Doppelsitzventilen als auch bei der Nachrüstung bereits vorhandener, bislang normalschaltender, jedoch sitzreinigungsfähiger Doppelsitzventile zu implementieren.

Das Einfügen der eigenständigen Einzelverstelleinrichtungen in ein relativ komplexes Gebilde, wie es ein Doppelsitzventil darstellt, ist deshalb möglich, weil die einzelnen Bauteile im Rahmen eines Baukaustensystems an ihren Anschluss- und Verbindungsstellen weitestgehend genormt oder standardisiert sind. Dies trifft zu sowohl für die Hauptverstelleinrichtung (Standardantrieb) als auch für das an das Ventilgehäuse angrenzende Laternengehäuse und die aus dem oberen Ventilgehäuseteil herausgeführten Verstellstangen. Die Gehäuseverbindungen erfolgen vorzugsweise über standardisierte sog. Spannringverbindungen und die Verstellstangen werden an den entsprechenden Stellen miteinander verschraubt. Durch die Anordnung der Einzelverstelleinrichtungen zwischen Hauptverstelleinrichtung und Ventilgehäuse bleibt die andere Seite der Hauptverstelleinrichtung frei für die Anordnung einer Steuereinrichtung, die unter anderem den Bewegungsablauf und die diskreten Endstellungen der Schließglieder überwacht und die gesamte Steuerungslogik sowie die Pilotventile aufnimmt.

Ein weiterer Vorteil resultiert aus der axialen Entkopplung der mit dem unabhängig angetriebenen ersten Schließglied verbundenen ersten Ventilstange, die sich im Bereich der Einzelverstelleinrichtungen in eine zweite Antriebsstange verlängert, bzw. aus der entsprechenden Entkopplung des mit der ersten Ventilstange axial fest verbundenen zweiten Antriebskolbens von einer in der Hauptverstelleinrichtung angeordneten und gleichfalls bis in den Bereich der Einzelverstelleinrichtungen hineinreichenden ersten Antriebsstange. Durch diese Entkopplung wird die zum vollen Öffnungshub H des Ventils gegenläufige Teilhubbewegung T1 des unabhängig angetriebenen, als Schieberkolben ausgebildeten ersten Schließgliedes erst möglich.

Andererseits erlaubt es die durch die vorg. Entkopplung erst realisierbare axial verschiebliche Lagerung des zweiten Antriebskolbens auf der ersten Antriebsstange, diesen im Bedarfsfalle, nämlich bei der vollen Öffnungsbewegung, in Richtung dieser Öffnungsbewegung so weit an der Lagerstelle zu verschieben, bis er mit der ersten Antriebsstange in eine Mitnahmeverbindung gelangt. In dieser Mitnahmeverbindung unterstützt der zweite Antriebskolben nunmehr die Hauptverstelleinrichtung beim Öffnungshub H, da der zweite Antriebskolben erfindungsgemäß auf jeder seiner beiden Kolbenflächen druckmittelbeaufschlagbar ist und dadurch in Richtung der vollen Öffnungsbewegung des Doppelsitzventils eine zusätzliche, eigenständige Öffnungskraft bereitstellen kann. Der zweite Antriebskolben und damit die zugeordnete Einzelverstelleinrichtung haben somit in dieser Bewegungsphase des Antriebs die Funktion eines sog. "Stapelantriebes".

Die besondere Antriebskinematik der vorgeschlagenen Vorrichtung besteht darin, dass der Kraftfluss vom zweiten Antriebskolben über die erste Antriebsstange und den ersten Antriebskolben auf die Vorspannkraft der Hauptfeder einwirken kann. Umgekehrt ist es durch die axiale Entkopplung zwischen Hauptverstelleinrichtung und Einzelverstelleinrichtungen aber nicht möglich, von der Hauptverstelleinrichtung eine Öffnungskraft auf das erste Schließglied zu übertragen. Ein Öffnen des Doppelsitzventils allein mit Hilfe der Hauptverstelleinrichtung ist daher nicht möglich. Die Öffnung des Doppelsitzventils erfolgt nach Vorgabe durch die Hubbewegung des ersten Antriebskolbens zwingend immer nur dann, wenn der zweite Antriebskolben der ersten Antriebsstange in der Hauptverstelleinrichtung im entsprechenden kraftunterstützenden Nachlauf folgt.

Da der zweite Antriebskolben, nicht in notwendiger, aber in wünschenswerter Weise, annähernd den gleichen Kolbenquerschnitt wie der erste Antriebskolben in der Hauptverstelleinrichtung aufweist, ergibt sich durch die vorgenannte Stapelfunktion die Möglichkeit, die öffnungskraftrelevanten Abmessungen der Hauptverstelleinrichtung (vornehmlich ist dies der Durchmesser) deutlich zu reduzieren, wodurch unter anderem eine erhebliche Kostenreduzierung erfolgt. Andererseits erwächst aus dem vorgenannten Sachverhalt die Möglichkeit, das Doppelsitzventil ohne Reduzierung der Abmessungsverhältnisse des Antriebs auch mit geringeren Betriebsdrücken des Druckmittels zu betreiben.

Die beiden eigenständigen Einzelverstelleinrichtungen bauen raumsparend und kompakt, wenn sie, wie dies vorgeschlagen wird, in einem einzigen, aus zwei Gehäuseteilen gebildeten Gehäuse angeordnet sind und dort mit ihren Antriebskolben drei unabhängig voneinander ansteuerbare Druckmittelräume bilden, wobei der zweite Druckmittelraum zwischen dem zweiten Antriebskolben und dem dritten Gehäuseteil, der dritte Druckmittelraum zwischen dem dritten Antriebskolben und dem vierten Gehäuseteil und der vierte Druckmittelraum zwischen den beiden Antriebskolben der Einzelverstelleinrichtungen gebildet werden.

Wenn, wie dies weiterhin vorgesehen ist, die erste Antriebsstange der Hauptverstelleinrichtung aus letzterer in Richtung der Einzelverstelleinrichtungen herausgeführt und dort in der Stirnseite der mit der ersten Verstellstange fest verbundenen zweiten Antriebstange axial verschieblich bis zu einer Anschlagfläche geführt ist, dann ist es möglich, den zweiten Antriebskoben aus korrosionsbeständigem Leichtmetall, vorzugsweise aus Aluminium, herzustellen. Dies wird darüber hinaus aus Kosten- und Gewichtsersparnisgründen auch für die anderen Antriebskolben vorgeschlagen.

Zur leichteren Anpassung des Antriebes der zweiten Einzelverstelleinrichtung, die zur Realisierung des Teilhubes T2 für das abhängig angetriebene Schließglied vorgesehen ist, an unterschiedliche, vor allem aber relativ niedrige Drücke des Druckmittels sieht eine weitere Ausführungsform der vorgeschlagenen Vorrichtung vor, dass der dritte Antriebskolben auf seiner dem zweiten Antriebskolben zugewandten Seite mit einem durchmesserkleineren Zusatzkolben fest, jedoch lösbar verbunden ist, dass der Zusatzkolben im Zusammenwirken mit einem am Gehäuse der Einzelverstelleinrichtungen festgelegten Gehäusering einen fünften Druckmittelraum bildet, der mit einem zwischen dem dritten Antriebskolben und dem vierten Gehäuseteil gebildeten dritten Druckmittelraum verbunden ist, und dass sich bei Zufuhr eines dritten Druckmittelstromes zum dritten Druckmittelraum auch zusätzlich im fünften Druckmittelraum eine auf den Zusatzkolben wirkende Zusatzkraft ergibt, die sich einer auf den dritten Antriebskolben wirkenden Kraft additiv überlagert. Durch die Anordnung eines Zusatzkolbens am Antriebskolben der zweiten Einzelverstelleinrichtung erhält letztere eine Funktion, die vielfach auch als sog: "Stapelfunktion" bezeichnet wird. Der Antriebskolben erfährt durch den Zusatzkolben quasi eine Flächenvergrößerung, die sich durch die gewählte Anordnung allerdings nicht in einer durchmessergrößeren Kolbenfläche auswirkt, sondern die in einer zweiten, parallelen Ebene stattfindet. Im vorliegenden Falle gelangt das Druckmittel zunächst zum Antriebskolben und anschließend zum Zusatzkolben, um jeweils über die installierte Kolbenfläche eine Kraft am jeweiligen zugeordneten Kolben zu entfalten, wobei diese beiden Kräfte, die Kraft am Antriebskolben und die Zusatzkraft am Zusatzkolben, sich additiv überlagern.

Eine kompakte Anordnung der zweiten Einzelverstelleinrichtung mit Zusatzkolben wird gemäß einem weiteren Vorschlag dadurch erreicht, dass der Zusatzkolben einen durchmessergrößeren äußeren Kolbenabschnitt und einen durchmesserkleineren inneren Kolbenabschnitt aufweist, dass der innere Kolbenabschnitt stirnseitig gegen den dritten Antriebskolben abgedichtet und mit diesem verschraubt ist, dass der äußere Kolbenabschnitt umfangsseits gegen die Mantelfläche einer zylindrischen Ausnehmung im Gehäusering und der innere Kolbenabschnitt umfangsseits in einer koaxialen Durchgangsbohrung im Gehäusering gedichtet sind, und dass im Verbindungsbereich des dritten Antriebskolbens mit dem Zusatzkolbens in ersterem ein erster Druckmittelkanal und in letzterem ein zweiter Druckmittelkanal angeordnet sind, die miteinander korrespondieren und die den dritten Druckmittelraum und den fünften Druckmittelraum druckmitteldurchlässig miteinander verbinden. Der im Gehäuse der Einzelverstelleinrichtungen festgelegte Gehäusering bildet einerseits mit dem Zusatzkolben den notwendigen zusätzlichen fünften Druckmittelraum und schafft andererseits durch seine gehäuseseitige Abstützung die physikalischen Voraussetzungen für die Addition der Zusatzkraft zur Kraft am dritten Antriebskolben. Letzterer begrenzt in Verbindung mit dem vierten Gehäuseteil den dritten Druckmittelraum, in den der dritte Druckmittelstrom zunächst eingeleitet wird, um dann anschließend in den fünften Druckmittelraum zu gelangen.

Gemäß einer weiteren vorteilhaften Ausführungsform weist der Gehäusering umfangsseits einen radialen Vorsprung auf, mit dem der Gehäusering im Verbindungsbereich zwischen dem dritten und dem vierten Gehäuseteil formschlüssig festgelegt ist. Die Montage des Gehäuseringes ist unter diesen Bedingungen denkbar einfach, da letzterer in das dritte und das vierte Gehäuseteil eingelegt wird, bevor diese dann miteinander bevorzugt stoffschlüssig verbunden werden. Es versteht sich, dass auch eine lösbare Verbindung zwischen dem dritten und dem vierten Gehäuseteil vorgesehen werden kann.

Die erfindungsgemäße Vorrichtung wird entweder mit oder ohne Zusatzkolben ausgeführt. Da es von Vorteil ist, wenn das Gehäuse der Einzelverstelleinrichtungen mit den in Frage kommenden Druckmittelanschlüssen immer gleich ausgeführt ist, unabhängig davon, ob ein Zusatzkolben vorhanden ist oder nicht, sieht eine weitere Ausführungsform der vorgeschlagenen Vorrichtung vor, dass ein vierter Druckmittelanschluss für einen alternativen ersten Druckmittelstrom zur Beaufschlagung des im dritten Gehäuseteil angeordneten zweiten Antriebskolbens in einen vorgeschalteten vierten Druckmittelraum im Bereich zwischen dem dritten Antriebskolben und dem Gehäusering einmündet, und dass der vorgeschaltete vierte Druckmittelraum mit einem zwischen dem zweiten Antriebskolben einerseits und dem Gehäusering in Verbindung mit dem Zusatzkolben andererseits gebildeten vierten Druckmittelraum über wenigstens einen Verbindungskanal verbunden ist, der in einem die zylindrische Ausnehmung außenseits umfassenden Teil des Gehäuserings angeordnet ist. Durch diese Anordnung kann der vierte Druckmittelanschluss an jener Stelle im Gehäuse der Einzelverstelleinrichtungen verbleiben, an der er angeordnet wird, wenn die zweite Einzelverstelleinrichtung ohne Zusatzkolben ausgerüstet ist. Der Verbindungskanal im Gehäusering stellt dessen Durchlässigkeit für Druckmittel sicher, so dass das über den vierten Druckmittelanschluss zugeführte Druckmittel von der einen Seite des Gehäuserings auf dessen andere Seite unterhalb des zweiten Antriebskolbens gelangen kann.

Der in seinem Aufbau relativ einfache Gesamtantrieb, der durch seinen modularen Aufbau zusätzlich eine klare funktionale Trennung erfährt, ist relativ unproblematisch hinsichtlich einer Addition hinzunehmender Fertigungstoleranzen seiner einzelnen Bauteile, da die Schließglieder in ihrer jeweiligen Sitzreinigungsstellung jeweils unkritisch in die zugeordneten Ventilgehäuseteile hinein öffnen und daher Kollisionsgefahren im Zuge der Teiloffenstellungen T1, T2 nicht bestehen. Aus diesem Grunde bedarf die vorgeschlagene Vorrichtung keiner einstellbaren Anschläge zur Begrenzung der jeweiligen Teilhubbewegungen der Schließglieder im Zuge ihrer Sitzreinigung, sondern es sind denkbar einfache Endlagenbegrenzungen möglich. Diesbezüglich sieht ein Vorschlag vor, dass die Endlagenbegrenzung des zweiten Antriebskolbens für die erste Teiloffenstellung T1 und jene des dritten Antriebskolbens für die zweite Teiloffenstellung T2 durch einen am Gehäuse zwischen den Antriebskolben fest angeordneten, beiderseits axial anfahrbaren Anschlagring bzw. Gehäusering erfolgt.

Es wird weiterhin vorgeschlagen, dass der vierte Druckmittelraum mit einem ersten Druckmittelanschluss strömungsmäßig verbunden ist, der an einer im Anschluss an die Hauptverstelleinrichtung angeordneten Steuereinrichtung vorgesehen ist. Da gemäß einer vorteilhaften Ausführungsform diese Verbindung innerhalb der Hauptverstell- und der Einzelverstelleinrichtungen erfolgt, kann über diesen Weg auch der erste Druckmittelraum der Hauptverstelleinrichtung mit Druckmittel versorgt werden, so dass weder an der Hauptverstell- noch an dem Gehäuse der Einzelverstelleinrichtungen externe Druckmittelanschlüsse zur Ansteuerung des vollen Öffnungshubes H erforderlich sind.

Gleichwohl sieht eine weitere Ausführungsform vor, alternativ zur vorstehend vorgeschlagenen Lösung, den vierten Druckmittelraum mit einem vierten Druckmittelanschluss zu versehen, der am Gehäuse der Einzelverstelleinrichtungen vorgesehen ist. Unter Beibehaltung der internen Verbindungswege zwischen dem ersten und dem vierten Druckmittelraum ist mit dieser Lösung dann zusätzlich eine Ansteuerungsmöglichkeit gegeben, den vollen Öffnungshub des Doppelsitzventils über diesen externen vierten Druckmittelanschluss anzusteuern, wobei dann der erste Druckmittelanschluss an der Steuereinrichtung entfallen oder blindgesetzt werden kann.

Neben der axialen Entkopplung der ersten Ventilstange bzw. des zweiten Antriebskolbens von der ersten Antriebsstange in der Hauptverstelleinrichtung sieht eine weitere vorteilhafte Ausgestaltung vor, an dieser Entkopplungsstelle zusätzliche eine Drehentkopplung zwischen den vorgenannten Bauteilen zu verwirklichen. Bekanntlich werden bei der axialen Verformung einer Schraubenfeder, wie sie als Hauptfeder in der Hauptverstelleinrichtung vorgesehen ist, erhebliche Torsionsmomente von der Feder auf deren Widerlager, in diesem Falle auf den von dieser beaufschlagten ersten Antriebskolben und damit auf die erste Antriebsstange, übertragen. Diese Torsionsmomente können ein Lösen der miteinander verschraubten Antriebs- und Verstellstangen bewirken. Durch die vorgeschlagene Drehentkopplung zwischen Haupt- und Einzelverstelleinrichtungen bleibt die vorgenannte Drehbewegung auf die erste Antriebsstange begrenzt; eine Übertragung eines Drehmomentes auf andere Bauteile im Bereich der Einzelverstelleinrichtungen und des Doppelsitzventils ist ausgeschlossen.

Die Drehentkopplung gestaltet sich besonders vorteilhaft, wenn gemäß einem weiteren Vorschlag das stirnseitige Ende der ersten Antriebsstange ein Kopfstück trägt, das in eine Ausnehmung innerhalb eines an der zweiten Antriebsstange angeformten und gegenüber deren Durchmesser vergrößerten Kopfteils eingreift. Die Gleitbedingungen werden in diesem Zusammenhang dadurch verbessert, dass zwischen dem Kopfstück und der Ausnehmung eine Gleitlagerbuchse angeordnet ist.

Um die axiale Stellung des unabhängig angetriebenen ersten Schließgliedes auch nach der axialen Entkopplung von der ersten Antriebsstange in der Steuereinrichtung erfassen zu können, ist gemäß einem weiteren Vorschlag eine Stellungsmeldestange vorgesehen, die die erste Antriebsstange vollständig und die zweite Antriebsstange bis zur ersten Verstellstange jeweils konzentrisch durchdringt, die einerseits in einer Steuereinrichtung endet und andererseits mit ihrem stirnseitigen Ende in die zweite Antriebsstange eingeschraubt ist und dabei mit ihrer zugeordneten zweiten Stirnfläche die Schraubverbindung zwischen Verstell- und Antriebsstange an einer ersten Stirnfläche der ersten Verstellstange kontert.
Die vorgeschlagene Konterung erschwert bzw. verhindert ein Lösen der Schraubverbindung zwischen der ersten Verstellstange und der zweiten Antriebsstange im Bereich der zweiten Einzelverstelleinrichtung.

Der Ringkanal, der zwischen der Stellungsmeldestange innenseits und der ersten Antriebsstange, dem Kopfstück, dem Kopfteil sowie der zweiten Antriebsstange jeweils außenseits gebildet wird, wird vorteilhaft als Transportweg für das Druckmittel zum ersten Druckmittelraum sowie zum vierten Druckmittelraum genutzt, wobei die Verteilung des Druckmittels in diese Räume über entsprechende Querbohrungen erfolgt.

Durch die vorstehend erläuterte Stapelfunktion der ersten Einzelverstelleinrichtung im Zusammenwirken mit der zur Erzeugung des vollen Öffnungshubes H vorgesehenen Hauptverstelleinrichtung ist eine Reduzierung der Durchmesserabmessungen der Hauptverstelleinrichtung möglich, so dass das Gehäuse der Hauptverstell- und jenes der Einzelverstelleinrichtungen, wobei letztere anforderungsgemäß an sich geringere Stellkräfte als die Hauptverstelleinrichtung aufbringen müssen, ohne weiteres durchmessergleich ausgeführt werden können.
Dadurch ist es wiederum möglich, wie dies ein weiterer Vorschlag vorsieht, die Gehäuseteile der Hauptverstelleinrichtung und jene der Einzelverstelleinrichtungen aus formgleichen Gehäuserohteilen zu fertigen, wodurch sich eine weitere Kostenreduzierung ergibt. Die Herstellkosten lassen sich weiter dadurch reduzieren, dass die Gehäuseteile der Hauptverstelleinrichtung und jene der Einzelverstelleinrichtungen jeweils miteinander stoffschlüssig, vorzugsweise durch Schweißen, verbunden sind. Es versteht sich, dass die in Frage kommenden Gehäuseteile auch lösbar miteinander verbunden werden können.

Insgesamt hat sich gezeigt, dass die vorgeschlagene Vorrichtung zum Antrieb für Doppelsitzventile, mit der zum einen ein sog. modulares Antriebskonzept realisiert wird und zum anderen weitere kostensenkende Maßnahmen vorgeschlagen werden, gegenüber den bekannten sog. integrierten Antrieben zu einer erheblichen Reduzierung der Herstellkosten führt, die bis zur Halbierung der bisherigen Kosten heranreicht.

### KURZBESCHREIBUNG DER ZEICHNUNGEN

Ausführungsbeispiele der vorgeschlagenen Vorrichtung zum Antrieb für Doppelsitzventile gemäß der Erfindung sind in der Zeichnung dargestellt und werden nachfolgend nach Aufbau und Funktion beschrieben. Es zeigen
- **Figur 1**: einen Mittelschnitt durch eine erste Ausführungsform einer Vorrichtung gemäß der Erfindung zum Antrieb für Doppelsitzventile der gattungsgemäßen Art, wobei ein in seiner Schließstellung befindliches diesbezügliches Doppelsitzventil unterhalb und eine Steuereinrichtung (im Teilschnitt) oberhalb der vorgeschlagenen Vorrichtung angeordnet sind;

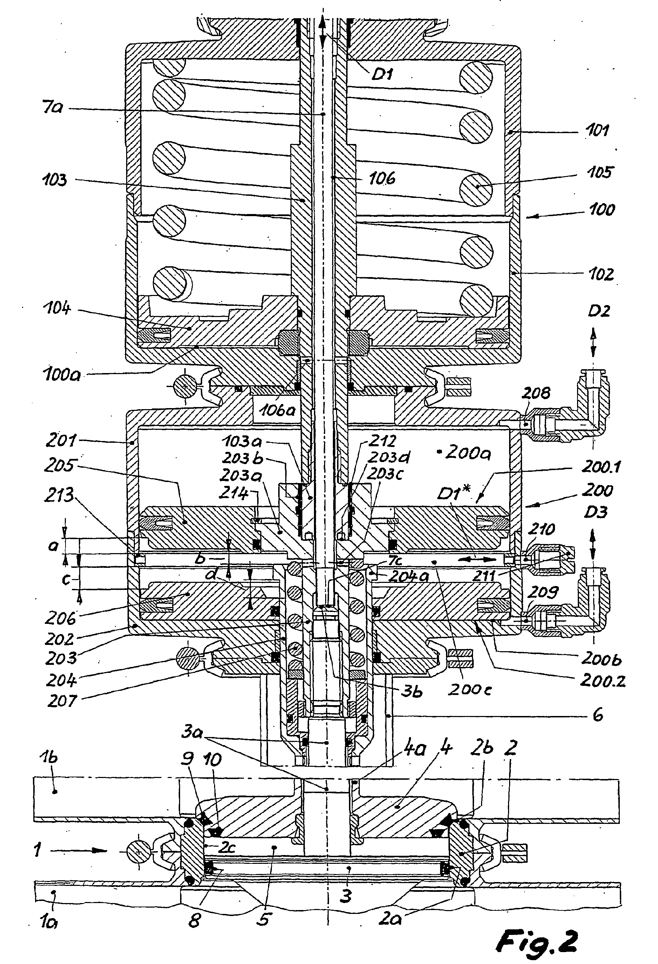

- **Figur 2**: einen Mittelschnitt durch die Vorrichtung gemäß **Figur 1****,** wobei die dargestellte Vorrichtung die Lage ihrer bewegungsabhängigen Bauteile so abbildet, dass diese der Schließstellung der im unteren Bereich der Darstellung ausschnittsweise abgebildeten beiden Schließglieder entspricht;

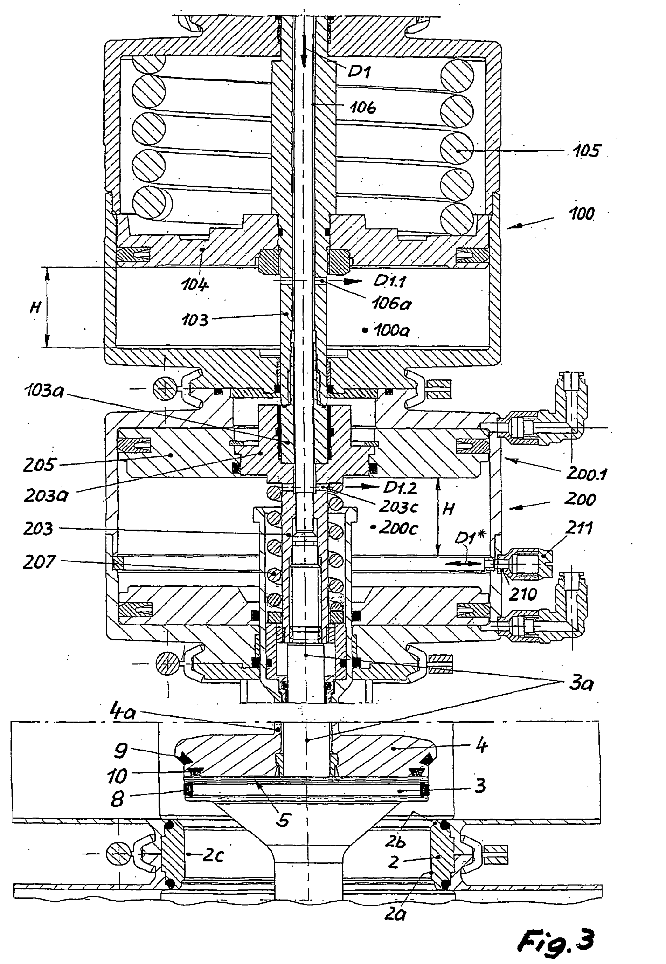

- **Figur 3**: gleichfalls im Mittelschnitt die Vorrichtung und die zugeordneten beiden Schließglieder gemäß Figur 2, wobei sich die infrage kommenden Bauteile der Vorrichtung nunmehr in einer der vollen Offenstellung der beiden Schließglieder entsprechenden Lage befinden;

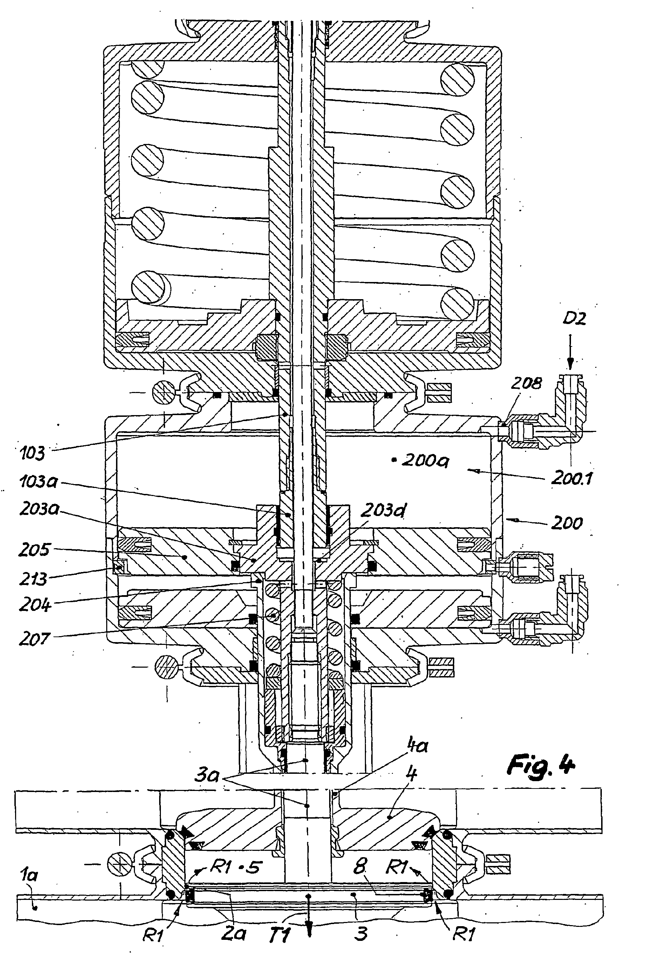

- **Figur 4**: gleichfalls im Mittelschnitt die Vorrichtung und die zugeordneten beiden Schließglieder gemäß Figur 2, wobei sich die infrage kommenden Bauteile der Vorrichtung nunmehr in einer der Sitzreinigungsstellung des als Schieberkolben ausgebildeten ersten Schließgliedes entsprechenden Lage befinden und

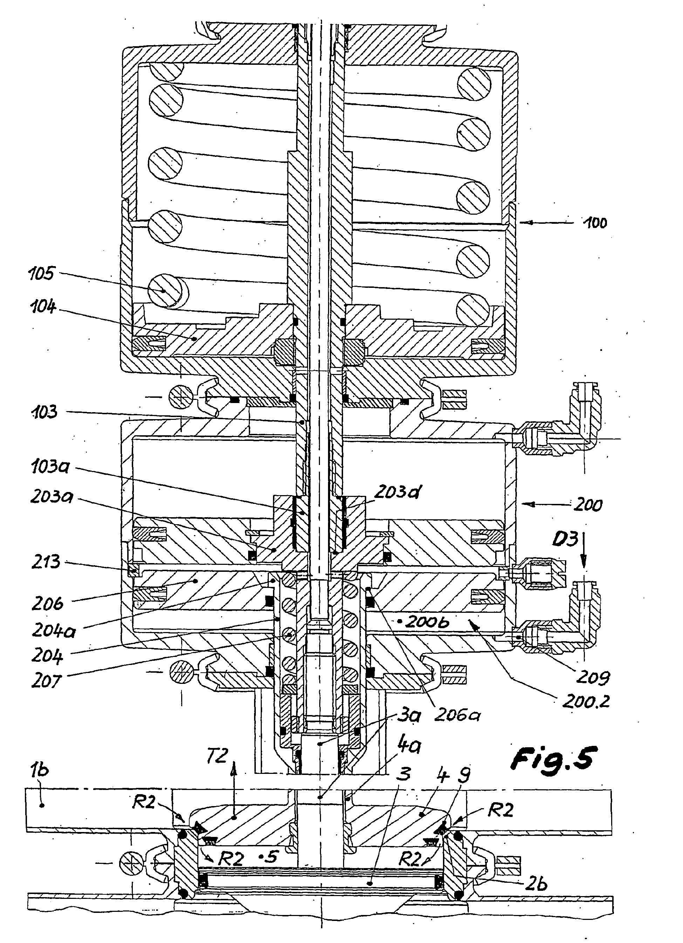

- **Figur 5**: gleichfalls im Mittelschnitt die Vorrichtung und die zugeordneten beiden Schließglieder gemäß Figur 2, wobei sich die infrage kommenden Bauteile der Vorrichtung nunmehr in einer der Sitzreinigungsstellung des als Sitzteller ausgebildeten zweiten Schließgliedes entsprechenden Lage befinden;

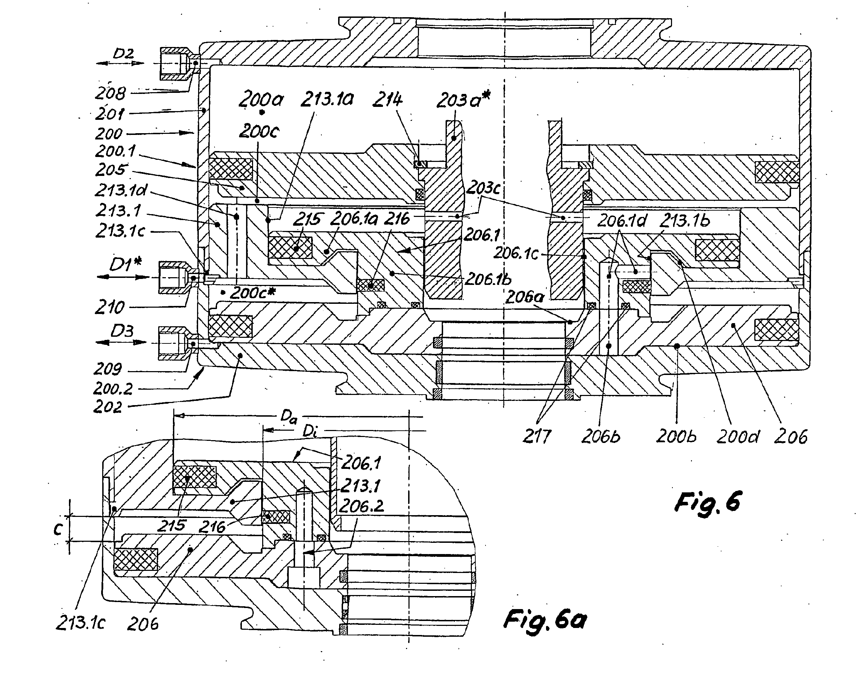

- **Figur 6**: einen Mittelschnitt durch eine zweite Ausführungsform der Einzelverstelleinrichtungen gemäß der Erfindung, wobei der dritte Antriebskolben mit einem Zusatzkolben verbunden ist und somit die zugeordnete zweite Einzelverstelleinrichtung eine sog. "Stapelfunktion" erhält und
- **Figur 6a**: einen Ausschnitt aus den Einzelverstelleinrichtungen gemäß Figur 6 im Bereich der Schraubverbindung zwischen dem dritten Antriebskolben und dem Zusatzkolben.

### DETAILLIERTE BESCHREIBUNG

Die vorgeschlagene Vorrichtung 100, 200 (**Figur 1**) dient dem Antrieb eines Doppelsitzventils, das im wesentlichen aus einem Ventilgehäuse 1 mit einem ersten und einem zweiten Ventilgehäuseteil 1a bzw. 1 b, zwei unabhängig voneinander bewegbaren Schließgliedern 3 und 4 mit jeweils zugeordneten Verstellstangen 3a bzw. 4a, einem Sitzring 2, der über seine innenseitige Verbindungsöffnung 2c eine Verbindung zwischen den Ventilgehäuseteilen 1 a, 1b herstellt, einem das zweite Ventilgehäuseteil 1b mit der Vorrichtung 100, 200 verbindenden Laternengehäuse 6 sowie einer Steuereinrichtung 7 besteht, wobei letztere auf der dem Doppelsitzventil abgewandten Seite der Vorrichtung 100, 200 angeordnet ist.
Das unabhängig angetriebene, als Schieberkolben ausgebildete erste Schließglied 3 ist umfangsseits mit einer ausschließlich radial wirkenden ersten Sitzdichtung 8 ausgestattet, der eine erste Sitzfläche 2a zugeordnet ist (**Figur 2**), die von der die Verbindungsöffnung 2c begrenzenden zylindrischen Mantelfläche im Sitzring 2 gebildet wird. Das abhängig angetriebene, als Sitzteller ausgebildete zweite Schließglied 4 besitzt in seinem Sitzbereich eine sowohl radial aus auch axial wirkende zweite Sitzdichtung 9, die mit einer ebenfalls am Sitzring 2 ausgebildeten zweiten Sitzfläche 2b zusammenwirkt. Zwischen den beiden Schließgliedern 3, 4 wird ein Leckagehohlraum 5 gebildet, der in der vollen Offenstellung H des Doppelsitzventils (**Figur 3**) mittels einer ausschließlich axial wirkenden Dichtung 10, die in der dem Leckagehohlraum 5 zugewandten Stirnfläche des zweiten Schließgliedes 4 angeordnet ist, gegenüber seiner Umgebung abgedichtet ist.

Sowohl in der Schließ- als auch in der Offenstellung des Doppelsitzventils (siehe neben **Figur 1** auch **Figuren 2****,** **3**) können der Leckagehohlraum 5 sowie die strömungsmäßig beaufschlagbaren angrenzenden Bauteile mittels eines Reinigungsmittels R, das über einen im Bereich des Laternengehäuses 6 an der zweiten Verstellstange 4a angeordneten Reinigungsmittelanschluss 11 vorzugsweise einem nicht näher bezeichneten Ringkanal zwischen der ersten und der zweiten Verstellstange 3a, 4a zugeführt wird, gereinigt werden. Die Abfuhr des derart "extern" zugeführten Reinigungsmittels R aus dem Leckagehöhlraum 5 erfolgt dabei über eine nicht näher bezeichnete Verbindungsleitung, die in einer rohrförmigen, durch das erste Ventilgehäuseteil 1a hindurch- und aus diesem herausgeführten Verlängerung am ersten Schließglied 3 angeordnet ist.

Die Abfuhr eines "intern" zugeführten Reinigungsmittels über eine jeweilige Sitzreinigungsströmung R1, R2 aus dem Leckagehohlraum 5, das bei der Sitzreinigung des ersten oder des zweiten Schließgliedes 3, 4 aus dem jeweils zugeordneten Ventilgehäuseteil 1a bzw. 1 b herangeführt wird (s. hierzu auch die **Figuren 4** und **5**), erfolgt in gleicher Weise wie bei der externen Reinigungszufuhr R. Bei der Sitzreinigung des als Schieberkolben ausgebildeten ersten Schließgliedes 3 wird dieses so weit in Richtung des ersten Ventilgehäuseteils 1a verschoben (Figur 4), dass dadurch eine erste Teiloffenstellung T1 entsteht, in der die erste Sitzdichtung 8 die zugeordnete erste Sitzfläche 2a verlassen hat und die erste Sitzreinigungsströmung R1 aus dem ersten Ventilgehäuseteil 1a über die freigelegte erste Sitzfläche 2a in den Leckagehohlraum 5 generiert wird.

Zur Sitzreinigung des als Sitzteller ausgebildeten zweiten Schließgliedes 4 wird dieses so weit in Richtung des zweiten Ventilgehäuseteils 1 b verschoben (**Figur 5**), dass in einer dadurch vom zweiten Schließglied 4 eingenommenen Teiloffenstellung T2 die zweite Sitzdichtung 9 die zugeordnete zweite Sitzfläche 2b verlassen hat und die zweite Sitzreinigungsströmung R2 aus dem zweiten Ventilgehäuseteil 1b auf dem Weg über die freigelegte Sitzfläche 2b in den Leckagehohlraum 5 gelangt.

Zur Begrenzung der Reinigungsmittelmenge über die jeweilige Sitzreinigungsströmung R1, R2 bei der Sitzreinigung werden erforderlichenfalls an den Schließgliedern 3, 4 an sich bekannte, zum Leckagehohlraum 5 hin orientierte zylindrische Ansätze vorgesehen, die beim spaltweiten Entfernen der Schließglieder 3, 4 von ihren zugeordneten Sitzflächen 2a, 2b mit dem jeweiligen zylindrischen Ansatz noch hinreichend weit mit radialem Spiel in die Verbindungsöffnung 2c hineinreichen und dort jeweils einen sog. Drosselringspalt bilden. Die Begrenzung der Sitzreinigungsströmung R1, R2 wird alternativ auch dadurch erreicht, dass der jeweilige Teilhub nicht stationär, sondern oszillierend generiert wird.

Zur Realisierung der vorstehend kurz dargestellten Schaltbewegungen der Schließglieder 3, 4 (voller Öffnungshub H, Teiloffenstellungen T1 und T2) ist das Doppelsitzventil nunmehr mit der Vorrichtung 100, 200 gemäß der Erfindung ausgestattet, die für das Öffnen und Schließen des Doppelsitzventils im Rahmen des vollen Öffnungshubes H die Hauptverstelleinrichtung 100 im Zusammenwirken mit einer in den Einzelverstelleinrichtungen 200 vorgesehenen ersten Einzelverstelleinrichtung 200.1 (Figur 1) und für die Erzeugung der Teiloffenstellungen T1, T2 ausschließlich die Einzelverstelleinrichtungen 200 aufweist und in Anspruch nimmt. Die Hauptverstelleinrichtung 100 entspricht in ihrem Aufbau einem sog. Standardantrieb, mit dem allein ein Doppelsitzventil der in Rede stehenden Art voll geöffnet und geschlossen werden kann; Sonderfunktionen, wie die Sitzreinigung, lassen sich mit diesem Standardantrieb nicht erfüllen. Die Hauptverstelleinrichtung 100 ist hinsichtlich ihrer peripheren Gehäuseanschlüsse und sonstigen Verbindungsnotwendigkeiten derart ausgestaltet, dass sie bei Weglassen der Einzelverstelleinrichtungen 200 unmittelbar mit einem in der Länge zwar angepassten, sonst jedoch unveränderten Laternengehäuse 6 verbunden werden kann. Die erste Verstellstange 3a ist diesbezüglich endseitig (Bolzengewinde) derart ausgestaltet, dass sie sowohl komplementär zu einem Endabschnitt (Muttergewinde) einer zweiten Antriebsstange 203 der Einzelverstelleinrichtungen 200 als auch komplementär zu einem Endabschnitt einer ersten Antriebsstange 103 der Hauptverstelleinrichtung 100 ist, mit denen sie im Bedarfsfalle jeweils verschraubt wird. Die zweite Verstellstange 4a setzt sich oberhalb des Reinigungsmittelanschlusses 11 in einer als Hohlstange ausgebildeten dritten Antriebsstange 204 fort und endet in den Einzelverstelleinrichtungen 200.

Da die Hauptverstelleinrichtung 100 und die Einzelverstelleinrichtungen 200 in speziellen Betriebszuständen des Doppelsitzventils axial voneinander entkoppelt sind, die Stellung insbesondere des ersten Schließgliedes 3 ggf. zu jedem Zeitpunkt aber erfasst werden muss, ist eine Stellungsmeldestange 7a vorgesehen, die die erste Antriebsstange 103 vollständig und die zweite Antriebsstange 203 bis zur ersten Verstellstange 3a jeweils konzentrisch durchdringt, die einerseits in der Steuereinrichtung 7 endet und andererseits mit ihrem stirnseitigen Ende in die mit der ersten Verstellstange 3a fest verschraubte zweite Antriebsstange 203 eingeschraubt ist.

Zur Ansteuerung der Hauptverstelleinrichtung 100 ist an der Steuereinrichtung 7 ein erster Druckmittelanschluss 7b vorgesehen, über den ein erster Druckmittelstrom D1 zu- bzw. abgeführt wird. Alternativ hierzu kann die Hauptverstelleinrichtung 100 über einen an den Einzelverstelleinrichtungen 200 angeordneten vierten Druckmittelanschluss 210 mit einem alternativen ersten Druckmittelstrom D1* beschickt werden. Zur Erzeugung der Teiloffenstellungen T1, T2 verfügen die Einzelverstelleinrichtungen 200 über einen zweiten und einen dritten Druckmittelanschluss 208, 209 für einen zweiten und dritten Druckmittelstrom D2, D3.

Das Gehäuse der Hauptverstelleinrichtung 100 (Figur 2; die Vielzahl von Dichtungen der Vorrichtung sind hier und in den weiteren Figuren im einzelnen nicht bezeichnet) besteht aus einem ersten und einem zweiten Gehäuseteil 101, 102, die im wesentlichen aus formgleichen Gehäuserohteilen gefertigt sind. Auf der ersten Antriebsstange 103 ist ein mit einer Kolbendichtung versehener erster Antriebskoben 104 angeordnet und dort mit einer nicht näher bezeichneten Mutter festgelegt. Eine vorgespannte Hauptfeder 105 findet einerseits ihr Widerlager an dem ersten Antriebskolben 104 und andererseits an dem ersten Gehäuseteil 101. Nach Einbau des ersten Antriebskolbens 104, der ersten Antriebsstange 103 und der Hauptfeder 105 in die beiden Gehäuseteile 101, 102 werden letztere bevorzugt stoffschlüssig, vorzugsweise durch Schweißung, miteinander verbunden. Die Dichtungen und Führungsbuchsen im Gehäuse 101/102 der Hauptverstelleinrichtung 100 sind auch nach deren Endmontage austauschbar. Die hohle erste Antriebsstange 103 wird von der Stellungsmeldestange 7a durchdrungen, und ein zwischen diesen beiden Stangen 7a, 103 gebildeter Ringkanal 106 dient dem Transport des ersten Druckmittelstromes D1 bzw. des ersten alternativen Druckmittelstromes D1*. Beide gelangen jeweils über erste Querbohrungen 106a als erster Druckmittelstrom D1.1 (s. **Figur 3**) in einen zwischen dem ersten Antriebskolben 104 und dem zweiten Gehäuseteil 102 gebildeten ersten Druckmittelraum 100a, von wo sie auch in umgekehrter Richtung abströmen.

Unterhalb der Hauptverstelleinrichtung 100 sind die Einzelverstelleinrichtungen 200 additiv eingefügt. Letztere setzen sich, von oben nach unten gesehen, aus einer ersten Einzelverstelleinrichtung 200.1 zur Erzeugung der ersten Teiloffenstellung T1 des ersten Schließgliedes 3 und aus einer zweiten Einzelverstelleinrichtung 200.2 zur Erzeugung der zweiten Teiloffenstellung T2 des zweiten Schließgliedes 4 zusammen. Das Gehäuse der Einzelverstelleinrichtungen 200 wird aus einem dritten und einem vierten Gehäuseteil 201, 202 gebildet, die im wesentlichen aus formgleichen Gehäuserohteilen gefertigt sind und nach Montage der Einbauteile bevorzugt stoffschlüssig, vorzugsweise durch Schweißung, miteinander verbunden sind.

In der ersten Einzelverstelleinrichtung 200.1 ist ein umfangsseits mit einer Kolbendichtung versehener zweiter Antriebskolben 205 angeordnet, in den innenseits ein Kopfteil 203a, das an der zweiten Antriebsstange 203 angeformt und gegenüber dieser im Durchmesser vergrößert ist, formschlüssig und dichtend derart eingreift, dass die zweite Antriebsstange 203 und der zweite Antriebskolben 205 als fest miteinander verbunden angesehen werden können. Zur Festlegung des Kopfteils 203a im zweiten Antriebskolben 205 dient ein Sicherungsring 214. Zwischen dem zweiten Antriebskolben 205 und dem dritten Gehäuseteil 201 wird ein zweiter Druckmittelraum 200a gebildet, der mit dem zweiten Druckmittelanschluss 208 verbunden ist.

Unterhalb des zweiten Antriebskolbens 205 ist in dem vierten Gehäuseteil 202 ein umfangsseits mit einer Kolbendichtung versehener dritter Antriebskolben 206 angeordnet, der innenseits auf der als Hohlstange ausgebildeten dritten Antriebsstange 204 axial verschieblich gelagert und mit dieser in Richtung der zweiten Teiloffenstellung T2 an einem am Ende der Antriebsstange 204 angeformten Rezess 204a in eine Mitnahmeverbindung verbringbar ist. Zwischen dem dritten Antriebskolben 206 und dem vierten Gehäuseteil 202 wird ein dritter Druckmittelraum 200b gebildet, der mit dem dritten Druckmittelanschluss 209 verbunden ist. Ein vierter Druckmittelraum 200c wird umfangsseits durch das Gehäuse der Einzelverstelleinrichtungen 201/202, auf der einen Stirnseite durch den zweiten Antriebskolben 205 und auf der anderen Stirnseite durch den dritten Antriebskolben 206 berandet. Dem vierten Druckmittelraum 200c wird im Bedarfsfalle entweder über den Ringkanal 106 und von diesem unterhalb des Kopfteils 203a abzweigende zweite Querbohrungen 203c ein zweiter Druckmittelteilstrom D1.2 (siehe **Figur 3**) oder über den vierten Druckmittelanschluss 210 der alternative erste Druckmittelstrom D1* zugeführt. Im dargestellten Ausführungsbeispiel ist der vierte Druckmittelanschluss 210 allerdings durch einen Verschlussstopfen 211 blindgesetzt.

Zwischen dem Kopfteil 203a und der dritten Antriebsstange 204 ist im Bereich der zweiten Einzelverstelleinrichtung 200.2 innerhalb einer Erweiterung der hohlstangenförmig ausgebildeten dritten Antriebsstange 204 eine zweite Feder 207 angeordnet, deren Vorspannung so bemessen ist, dass das als Sitzteller ausgebildete zweite Schließglied 4 in seiner Schließlage mit hinreichender Kraft auf die zugeordnete zweite Sitzfläche 2b gedrückt wird. In der Offenstellung des Doppelsitzventils (Figur 3) reicht die aufgrund einer geringfügigen Dehnung der zweiten Feder 207 etwas reduzierte Vorspannung noch aus, um die Schließglieder 3, 4 mit hinreichender Kraft aneinander zu pressen, damit der Leckagehohlraum 5 über die Dichtung 10 zur Umgebung hin sicher abgedichtet ist.

Die Endlagenbegrenzung des zweiten Antriebskolbens 205 für die erste Teiloffenstellung T1 (**Figur 4**) und jene des dritten Antriebskolbens 206 für die zweite Teiloffenstellung T2 (**Figur 5**) erfolgt durch einen am Gehäuse 201/202 zwischen den Antriebskolben 205, 206 fest angeordneten, beiderseits axial anfahrbaren Anschlagring 213. Die erste Teiloffenstellung T1 ergibt sich zwangsläufig aus dem axialen Abstand zwischen dem Anschlagring 213 und dem zweiten Antriebskolben 205 (erster Teilhubweg a; T1 = a), wenn die mögliche Verschiebung zwischen dem Kopfteil 203a und dem Ende der dritten Antriebsstange 204 (zweiter Teilhubweg b) so bemessen wird, dass a ≤ b gegeben ist (**Figur 2**). Die Einhaltung der Bedingung a ≥ b stellt demgegenüber sicher, dass in der Teiloffenstellung T1 das Schließglied 4 durch das Kopfteil 203a statisch bestimmt auf seine zugeordnete zweite Sitzfläche 2b gedrückt wird, da sich dann das Kopfteil 203a am Rezess 204a abstützt und nicht mittelbar über den zweiten Antriebskolben 205 am Anschlagring 213.

Der mögliche Verschiebeweg des dritten Antriebskolbens 206 bis zu seinem Anschlag am Anschlagring 213 ist außenseits durch den dritten Teilhubweg c bestimmt, während sich der dritte Antriebskolben 206 innenseits um einen vierten Teilhubweg d, der zwangsläufig kleiner als der dritte Teilhubweg c ausgeführt wird, verschieben kann, bis er in die Mitnahmeverbindung mit dem Rezess 204a gelangt. Demzufolge ergibt sich durch Ansteuerung des dritten Antriebskolbens 206 die zweite Teiloffenstellung T2, die durch die Differenz [c - d] bestimmt ist (T2 = c - d) (**Figur 2**).

Die erste Verstellstange 3a ist mit der zweiten Antriebsstange 203 im Bereich der zweiten Einzelverstelleinrichtung 200.2 verschraubt (**Figur 2**). Um ein Lösen dieser Schraubverbindung zu verhindern oder wenigstens zu erschweren, wird diese durch die Stellungsmeldestange 7a gekontert. Hierzu drückt letztere, die ihrerseits in die zweite Antriebsstange 203 koaxial eingeschraubt ist, mit einer zweiten Stirnfläche 7c auf eine endseitige erste Stirnfläche 3b der ersten Verstellstange 3a. Dadurch bildet die Stellungsmeldestange 7a die unmittelbare Fortsetzung der ersten Verstellstange 3a, so dass durch diese Anordnung die jeweilige Lage des ersten Schließgliedes 3 sicher erfasst wird.

In das in die Einzelverstelleinrichtungen 200 hineinreichende stirnseitige Ende der ersten Antriebsstange 103 ist ein Kopfstück 103a eingeschraubt, das in eine Ausnehmung 203b innerhalb des an der zweiten Antriebsstange 203 angeformten und gegenüber deren Durchmesser vergrößerten Kopfteils 203a eingreift. Das Kopfstück 103a ist in der Ausnehmung 203b sowohl axial verschieblich als auch drehbeweglich angeordnet, wobei die axiale Verschiebung durch eine Anschlagfläche 203d, die die stirnseitige Berandung der Ausnehmung 203b bildet, begrenzt wird. Zur Verminderung der Reibung ist zwischen dem Kopfstück 103a und der Ausnehmung 203b eine Gleitlagerbuchse 212 vorgesehen. Durch die im Bereich des Kopfstückes 103a getroffene Ausgestaltung sind die Hauptverstelleinrichtung 100 und die Einzelverstelleinrichtungen 200 in Richtung der ersten Teiloffenstellung T1 axial und in Drehrichtung generell voneinander entkoppelt.

Das Doppelsitzventil wird in seine volle Offenstellung H überführt (**Figur 3**), wenn der erste Druckmittelstrom D1 der vorgeschlagenen Vorrichtung über den Ringkanal 106 zugeführt wird. Der erste Druckmittelstrom D1 verzweigt sich an den ersten Querbohrungen 106a in den ersten Druckmittelteilstrom D1.1, der in den ersten Druckmittelraum 100a der Hauptverstelleinrichtung 100 gelangt, und in den zweiten Druckmittelteilstrom D1.2, der nahezu zeitgleich über die zweiten Querbohrungen 203c den vierten Druckmittelraum 200c der ersten Einzelverstelleinrichtung 200.1 beaufschlagt. Alternativ zur vorstehend beschriebenen Beschickung der Druckmittelräume 100a und 200c mit Druckmittel kann deren Beschickung auch über den vierten Druckmittelanschluss 210 erfolgen. In diesem Falle tritt der alternative erste Druckmittelstrom D1* zunächst vollständig in den vierten Druckmittelraum 200c ein, um dann aus diesem den ersten Druckmittelteilstrom D1.1 über die zweiten Querbohrungen 203c, den Ringkanal 106 und die ersten Querbohrungen 106a in den ersten Druckmittelraum 100a abzuleiten.

Die derart druckmittelbeaufschlagten beiden Antriebskolben 104 und 205 greifen mit ihrer jeweiligen Öffnungskraft, die sich aus dem jeweiligen Druck im zugeordneten Druckmittelraum 100a, 200c und der jeweiligen vorgesehenen wirksamen Kolbenfläche ergibt, unmittelbar bzw. mittelbar (über Kopfstück 103a) an der ersten Antriebsstange 103 an und überwinden somit gemeinsam die Vorspannkraft der Hauptfeder 105. Durch die axiale Entkopplung der Anordnung im Bereich der Paarung Kopfstück 103a/Kopfteil 203a können ggf. entgegen der Öffnungsbewegung an den beiden Schließgliedern 3, 4 angreifende Druck- und/oder Reibungskräfte allein vom zweiten Antriebskolben 205 überwunden werden. In der Summe gesehen überwinden beide Antriebskolben 104, 205 im Zuge der Öffnungsbewegung die aus der Vorspannkraft der Hauptfeder 105 und aus sämtlichen Druckund/oder Reibungskräften resultierende Gesamtwiderstandskraft, so dass der ersten Einzelverstelleinrichtung 200.1 in dieser Bewegungsphase die Aufgabe eines sog. Stapelantriebes zukommt, wodurch die vorstehend beschriebene Durchmesserreduzierung der Hauptverstelleinrichtung 100 begründet und erreichbar ist.

Die Sitzreinigung des ersten Schließgliedes 3 (**Figur 4**) erfolgt durch Einleitung des zweiten Druckmittelstromes D2 in den zweiten Druckmittelraum 200a der ersten Einzelverstelleinrichtungen 200.1 auf dem Weg über den zweiten Druckmittelanschluss 208. Dadurch wird der druckmittelbeaufschlagte zweite Antriebskolben 205 nach unten in die Teiloffenstellung T1 = a verschoben (s. auch **Figur 2**), wodurch die zugeordnete erste Sitzfläche 2a freigelegt wird und die erste Sitzreinigungsströmung R1 aus dem ersten Ventilgehäuseteil 1a auf dem Weg über den spaltweit geöffneten Sitz 2a/8 in den Leckagehohlraum 5 gelangt. Da die erste Antriebsstange 103 in Richtung der Einzelverstelleinrichtungen 200 endlagenbegrenzt ist, verbleibt auch das Kopfstück 103a in seiner entsprechenden Endlage. Durch die axiale Entkopplung zwischen Kopfstück 103a und Kopfteil 203a kann sich der zweite Antriebskolben 205 auf dem Kopfstück 103a axial verschieben, so dass sich die Anschlagfläche 203d von letzterem löst und so weit entfernt, bis der Antriebskolben 205 außenseits an dem Anschlagring 213 zur Anlage kommt. Um einen Anschlag des Antriebskolbens 205 am Anschlagring 213 sicherzustellen und nicht über das Kopfteil 203a am stirnseitigen Ende der dritten Antriebsstange 204, dem Rezess 204a, muss die Bedingung a ≤ b erfüllt sein.

Die Sitzreinigung des zweiten Schließgliedes 4 (**Figur 5**) wird dadurch erreicht, dass dem dritten Druckmittelraum 200b der zweiten Einzelverstelleinrichtung 200.2 der dritte Druckmittelstrom D3 über den dritten Druckmittelanschluss 209 zugeführt wird. Dadurch bewegt sich der druckmittelbeaufschlagte dritte Antriebskolben 206 in Richtung zum Anschlagring 213 hin. Auf seinem Verschiebeweg bis zur Anlage an diesem hat er den dritten Teilhubweg c zu überwinden (s. **Figur 2**).
Zuvor gelangt er nach dem vierten Teilhubweg d mit seiner Mitnahmefläche 206a am Rezess 204a in eine Mitnahmeverbindung, so dass nach Anschlag an dem Anschlagring 213 von der dritten Antriebsstange 204 und somit vom zweiten Schließglied 4 die erforderliche Teiloffenstellung T2 = c - d gegen die Vorspannkraft der zweiten Feder 207 vollzogen wurde. Letztere findet ein Widerlager an dem Kopfteil 203a, das sich über seine Anschlagfläche 203d am Kopfstück 103a unverschieblich abstützt, da letzteres über die erste Antriebsstange 103 in Verbindung mit dem ersten Antriebskolben 104 von der Vorspannkraft der Hauptfeder 105 sicher in dieser Endlage fixiert wird. Durch die zweite Teiloffenstellung. T2 wird das zweite Schließglied 4 spaltweit von seiner zugeordneten zweiten Sitzfläche 2b entfernt, so dass die zweite Sitzreinigungsströmung R2 aus dem zweiten Ventilgehäuseteil 1 b über den Spalt zwischen der freigelegten zweiten Sitzfläche 2b und der zweiten Sitzdichtung 9 in den Leckagehohlraum 5 gelangt.

In der zweiten Einzelverstelleinrichtung 200.2 innerhalb der Einzelverstelleinrichtungen 200 (Figur 6), in der der dritte Antriebskolben 206 mit einer sog. "Stapelfunktion" versehen ist, ist letzterer auf seiner dem zweiten Antriebskolben 205 zugewandten Seite mit einem durchmesserkleineren Zusatzkolben 206.1 fest, jedoch lösbar verbunden. Der Zusatzkolben 206.1 bildet im Zusammenwirken mit einem am Gehäuse 201/202 der Einzelverstelleinrichtung 200 festgelegten Gehäusering 213.1 einen fünften Druckmittelraum 200d, der mit dem zwischen dem dritten Antriebskolben 206 und einem nicht näher bezeichneten Bodenteil des vierten Gehäuseteils 202 gebildeten dritten Druckmittelraum 200b verbunden ist.

Dabei weist der Zusatzkolben 206.1 einen durchmessergrößeren äußeren Kolbenabschnitt 206.1a und einen durchmesserkleineren inneren Kolbenabschnitt 206.1 b auf, wobei der äußere Kolbenabschnitt 206.1 a einen äußeren Durchmesser Dₐ und der innere Kolbenabschnitt 206.1 b einen inneren Durchmesser Dᵢ besitzt (**Figur 6a**). Der innere Kolbenabschnitt 206.1 b ist stirnseitig mittels koaxial zueinander angeordneter Dichtungen 217 gegen den dritten Antriebskolben 206 abgedichtet und mit diesem über eine Anzahl über dessen Umfang verteilt angeordnete Schraubenverbindungen 206.2 verschraubt. Der äußere Kolbenabschnitt 206.1a ist umfangsseits gegen die Mantelfläche einer zylindrischen Ausnehmung 213.1a im Gehäusering 213.1 mittels einer ersten Kolbendichtung 215 gedichtet. In gleicher Weise ist der innere Kolbenabschnitt 206.1 b umfangsseits in einer koaxialen Durchgangsbohrung 213.1 b im Gehäusering 213.1 mittels einer zweiten Kolbendichtung 216 gedichtet. Der dritte Druckmittelstrom D3 wird über den dritten Druckmittelanschluss 209 zunächst dem dritten Druckmittelraum 200b zugeführt. Von dort gelangt das Druckmittel über einen zwischen den beiden Dichtungen 217 in axialer Richtung durch den dritten Antriebskolben 206 verlaufenden ersten Druckmittelkanal 206b, um anschließend in einen mit diesem korrespondierenden, im Zusatzkolben 206.1 bis zum fünften Druckmittelraum 200d verlaufenden zweiten Druckmittelkanal 206.1 d zu gelangen.

Der Gehäusering 213.1 weist umfangsseits einen radialen Vorsprung 213.1c auf, mit dem er im Verbindungsbereich zwischen dem dritten und dem vierten Gehäuseteil 201, 202 formschlüssig festgelegt ist. Zwischen dem Gehäusering 213.1 und dem dritten Antriebskolben 206 wird ein vorgeschalteter vierter Druckmittelraum 200c* gebildet, in den der vierte Druckmittelanschluss 210 einmündet. Über letzteren wird der alternative erste Druckmittelstrom D1* zum Vollzug des vollen Öffnungshubes H für das unabhängig angetriebene Schließglied 3 zu- bzw. abgeführt. Der vorgeschaltete vierte Druckmittelraum 200c* ist mit dem zwischen dem zweiten Antriebskolben 205 einerseits und dem Gehäusering 213.1 in Verbindung mit dem Zusatzkolben 206.1 andererseits gebildeten vierten Druckmittelraum 200c über wenigstens einen Verbindungskanal 213.1 d verbunden, der in einem die zylindrische Ausnehmung 213.1 a außenseits umfassenden Teil des Gehäuseringes 213.1 angeordnet ist.

Der radiale Vorsprung 213.1 c ist auf seiner dem dritten Antriebskolben 206 zugewandten Seite derart ausgebildet, dass letzterer nach Vollzug des zweiten Teilhubweges c (**Figur 6a**) dort eine Endlagenbegrenzung erfährt und somit die entsprechende Begrenzung der zweiten Teiloffenstellung T2 innerhalb der zweiten Einzelverstelleinrichtung 200.2 sichergestellt ist.

Eine entsprechende Begrenzung des ersten Teilhubweges a unter der Bedingung a ≤ b (siehe auch **Figur 2**) erfolgt bei der ersten Einzelverstelleinrichtung 200.1, die die erste Teiloffenstellung T1 verwirklicht, dadurch, dass der zweite Antriebskolben 205 an dem am Gehäuse 201/202 fest angeordneten Gehäusering 213.1 zur Anlage kommt (**Figur 6**). Unter der Bedingung a ≥ b gelangt nach Vollzug der ersten Teiloffenstellung T1 ein modifizierter Kopfteil 203a* der das erste Schließglied 3 betätigenden zweiten Antriebsstange 203 (nicht dargestellt) zur Anlage am Rezess 204a (gleichfalls nicht dargestellt), wie dies im Zusammenhang mit der ersten Ausführungsform der Einzelverstelleinrichtungen 200 gemäß den Figuren 1 bis 5, insbesondere gemäß Figur 4, bereits beschrieben wurde.

Der dritte Antriebskolben 206 greift über die Mitnahmefläche 206a an dem Rezess 204a (vgl. auch **Figur 5**) an, um dadurch den Vollzug der zweiten Teiloffenstellung T2 des zweiten Schließgliedes 4 in der einen oder anderen Richtung zu bewirken. Die axiale Erstreckung des dem dritten Antriebskolben 206 zugewandten Endes des modifizierten Kopfteils 203a* macht es erforderlich, den Zusatzkolben 206.1 mit einer koaxialen Kolbenbohrung 206.1 c zu versehen, die das modifizierte Kopfteil 203a* außenseits mit Spiel umschließt.

### BEZUGSZEICHENLISTE DER VERWENDETEN ABKÜRZUNGEN

- 1: Ventilgehäuse
- 1 a: erstes Ventilgehäuseteil
- 1 b: zweites Ventilgehäuseteil
- 2: Sitzring
- 2a: erste Sitzfläche
- 2b: zweite Sitzfläche
- 2c: Verbindungsöffnung
- 3: erstes Schließglied
- 3a: erste Verstellstange
- 3b: erste Stirnfläche
- 4: zweites Schließglied
- 4a: zweite Verstellstange
- 5: Leckagehohlraum
- 6: Laternengehäuse
- 7: Steuereinrichtung
- 7a: Stellungsmeldestange
- 7b: erster Druckmittelanschluss
- 7c: zweite Stirnfläche
- 8: erste Sitzdichtung (radial)
- 9: zweite Sitzdichtung (radial, axial)
- 10: Dichtung (axial)
- 11: Reinigungsmittelanschluss

- 100: Hauptverstelleinrichtung
- 100a: erster Druckmittelraum
- 101/102: Gehäuse der Hauptverstelleinrichtung
- 101: erstes Gehäuseteil
- 102: zweites Gehäuseteil
- 103: erste Antriebsstange
- 103a: Kopfstück
- 104: erster Antriebskolben
- 105: Hauptfeder
- 106: Ringkanal
- 106a: erste Querbohrungen

- 200: Einzelverstelleinrichtungen
- 200.1: erste Einzelverstelleinrichtung
- 200.2: zweite Einzelverstelleinrichtung
- 200a: zweiter Druckmittelraum
- 200b: dritter Druckmittelraum
- 200c: vierter Druckmittelraum
- 200c*: vorgeschalteter vierter Druckmittelraum
- 200d: fünfter Druckmittelraum
- 201/202: Gehäuse der Einzelverstelleinrichtung
- 201: drittes Gehäuseteil
- 202: viertes Gehäuseteil
- 203: zweite Antriebsstange
- 203a: Kopfteil
- 203a*: modifizierter Kopfteil
- 203b: Ausnehmung
- 203c: zweite Querbohrungen
- 203d: Anschlagfläche
- 204: dritte Antriebsstange
- 204a: Rezess
- 205: zweiter Antriebskolben
- 206: dritter Antriebskolben
- 206a: Mitnahmefläche
- 206b: erster Druckmittelkanal
- 206.1: Zusatzkolben
- 206.1 a: äußerer Kolbenabschnitt
- 206.1 b: innerer Kolbenabschnitt
- 206.1 c: koaxiale Kolbenbohrung
- 206.1 d: zweiter Druckmittelkanal
- 206.2: Schraubenverbindung
- 207: zweite Feder
- 208: zweiter Druckmittelanschluss
- 209: dritter Druckmittelanschluss
- 210: vierter Druckmittelanschluss
- 211: Verschlussstopfen
- 212: Gleitlagerbuchse
- 213: Anschlagring
- 213.1: Gehäusering
- 213.1 a: zylindrische Ausnehmung
- 213.1b: koaxiale Durchgangsbohrung
- 213.1c: radialer Vorsprung
- 213.1 d: Verbindungskanal
- 214: Sicherungsring
- 215: erste Kolbendichtung
- 216: zweite Kolbendichtung
- 217: Dichtung

- a: erster Teilhubweg
- b: zweiter Teilhubweg
- c: dritter Teilhubweg
- d: vierter Teilhubweg

- D1: erster Druckmittelstrom
- D1.1: erster Druckmittelteilstrom
- D1.2: zweiter Druckmittelteilstrom
- D1*: alternativer erster Druckmittelstrom
- D2: zweiter Druckmittelstrom
- D3: dritter Druckmittelstrom
- Dₐ: äußerer Durchmesser
- Dᵢ: innerer Durchmesser
- H: voller Öffnungshub (volle Offenstellung)
- R: Reinigungsmittel
- R1: erste Sitzreinigungsströmung
- R2: zweite Sitzreinigungsströmung
- T1: erste Teiloffenstellung (T1 = a)
- T2: zweite Teiloffenstellung (T2 = c - d)

## Patentansprüche

1. Vorrichtung zum Antrieb für Doppelsitzventile, insbesondere für die Nahrungsmittel- und Getränkeindustrie,
• mit zwei unabhängig voneinander bewegbaren Schließgliedern (3, 4),
• die zwischen sich einen Leckagehohlraum (5) einschließen,
• der über wenigstens einen Verbindungsweg mit der Umgebung des Doppelsitzventils verbunden ist,
• mit dem unabhängig angetriebenen, als Schieberkolben ausgebildeten ersten Schließglied (3),
• das nach einem Teilhub an dem abhängig angetriebenen, als Sitzteller ausgebildeten zweiten Schließglied (4) zur Anlage kommt und dieses bei seiner weiteren Öffnungsbewegung gleichfalls in eine volle Offenstellung (H) überführt,
• mit teleskopartig ineinanderfassenden, auf der Seite des zweiten Schließglieds (4) aus einem Ventilgehäuse (1) nach außen herausgeführten Ventilstangen (3a, 203, 103; 4a, 204),
• über die die Schließglieder (3, 4), zusätzlich zu der vollen Offenstellung (H) und unabhängig voneinander, jeweils in eine Teiloffenstellung (T1, T2) verbringbar sind,
• wobei die gegenläufigen Teiloffenstellungen (T1, T2) durch den jeweiligen Schließgliedern (3, 4) zugeordnete Einzelverstelleinrichtungen (200; 200.1, 200.2) erzeugt werden
• und die Verstellung der Schließglieder (3, 4) durch druckmittelbeaufschlagte, auf die Verstellstangen (3a, 203; 4a, 204) einwirkende Antriebskolben (104, 205, 206 bzw. 202/206.1) erfolgt,
• wobei der dritte Antriebskolben (206; 206/206.1) auf der als Hohlstange ausgebildeten, die erste Verstellstange (3a, 203) umschließenden zweiten Verstellstange (4a, 204) axial verschieblich gelagert und mit dieser in Richtung der zweiten Teiloffenstellung (T2) in eine Mitnahmeverbindung verbringbar ist
• und wobei der zweite Antriebskolben (205) auf jeder seiner beiden Kolbenflächen druckmittelbeaufschlagbar ist,
**dadurch gekennzeichnet,**
• **dass** der zweite Antriebskolben (205) der ersten Einzelverstelleinrichtung (200.1) einerseits mit der das erste Schließglied (3) verstellenden ersten Verstellstange (3a, 203) fest verbunden ist,
• **dass** er andererseits unmittelbar oder mittelbar auf einer ersten Antriebsstange (103) einer Hauptverstelleinrichtung (100) axial verschieblich gelagert und mit dieser in Richtung der vollen Offenstellung (H) in eine Mitnahmeverbindung verbringbar ist,
• **dass** die volle Offenstellung (H) durch Druckbeaufschlagung der Hauptverstelleinrichtung (100) und der ersten Einzelverstelleinrichtung (200.1) erzeugt wird, wobei der zweite Antriebskolben (205) der ersten Antriebsstange (103) im entsprechenden kraftunterstützenden Nachlauf folgt,
• und **dass** die Einzelverstelleinrichtungen (200; 200.1, 200.2) eigenständig ausgebildet und zwischen der Hauptverstelleinrichtung (100) und dem Ventilgehäuse (1) additiv eingefügt sind.

2. Vorrichtung nach Anspruch 1, **dadurch gekennzeichnet,**
• **dass** die Einzelverstelleinrichtungen (200; 200.1, 200.2) in einem einzigen, aus zwei Gehäuseteilen (201, 202) gebildeten Gehäuse (201/202) angeordnet sind und dort mit ihren Antriebskolben (205, 206 bzw. 206/206.1)
• drei unabhängig voneinander ansteuerbare Druckmittelräume (200a, 200b, 200c bzw. 200c/200c*) bilden,
• und **dass** der zweite Druckmittelraum (200a) zwischen dem zweiten Antriebskolben (205) und dem dritten Gehäuseteil (201), der dritte Druckmittelraum (200b) zwischen dem dritten Antriebskolben (206) und dem vierten Gehäuseteil (202) und der vierte Druckmittelraum (200c bzw. 200c/200c*) zwischen den beiden Antriebskolben (205, 206) gebildet werden.

3. Vorrichtung nach Anspruch 1 oder 2, **dadurch gekennzeichnet, dass** die erste Antriebsstange (103, 103a) der Hauptverstelleinrichtung (100) aus letzterer in Richtung der Einzelverstelleinrichtungen (200; 200.1, 200.2) herausgeführt und dort in der Stirnseite der mit der ersten Verstellstange (3a) fest verbundenen zweiten Antriebstange (203, 203a bzw. 203a*) axial verschieblich bis zu einer Anschlagfläche (203d) geführt ist.

4. Vorrichtung nach einem der Ansprüche 1 bis 3, **dadurch gekennzeichnet, dass** der dritte Antriebskolben (206) auf seiner dem zweiten Antriebskolben (205) zugewandten Seite mit einem durchmesserkleineren Zusatzkolben (206.1) fest, jedoch lösbar verbunden ist, dass der Zusatzkolben (206.1) im Zusammenwirken mit einem am Gehäuse (201/202) der Einzelverstelleinrichtungen (200) festgelegten Gehäusering (213.1) einen fünften Druckmittelraum (200d) bildet, der mit einem zwischen dem dritten Antriebskolben (206) und dem vierten Gehäuseteil (202) gebildeten dritten Druckmittelraum (200b) verbunden ist, und dass sich bei Zufuhr eines dritten Druckmittelstromes (D3) zum dritten Druckmittelraum (200b) auch zusätzlich im fünften Druckmittelraum (200d) eine auf den Zusatzkolben (206.1) wirkende Zusatzkraft ergibt, die sich einer auf den dritten Antriebskolben (206) wirkenden Kraft additiv überlagert.

5. Vorrichtung nach Anspruch 4, **dadurch gekennzeichnet, dass** der Zusatzkolben (206.1) einen durchmessergrößeren äußeren Kolbenabschnitt (206.1 a) und einen durchmesserkleineren inneren Kolbenabschnitt (206.1b) aufweist, dass der innere Kolbenabschnitt (206.1 b) stirnseitig gegen den dritten Antriebskolben (206) abgedichtet und mit diesem verschraubt ist, dass der äußere Kolbenabschnitt (206.1a) umfangsseits gegen die Mantelfläche einer zylindrischen Ausnehmung (213.1 a) im Gehäusering (213.1) und der innere Kolbenabschnitt (206.1 b) umfangsseits in einer koaxialen Durchgangsbohrung (213.1b) im Gehäusering (213.1) gedichtet sind, und dass im Verbindungsbereich des dritten Antriebskolbens (206) mit dem Zusatzkolben (206.1) in ersterem ein erster Druckmittelkanal (206b) und in letzterem ein zweiter Druckmittelkanal (206.1d) angeordnet sind, die miteinander korrespondieren und die den dritten Druckmittelraum (200b) und den fünften Druckmittelraum (200d) druckmitteldurchlässig miteinander verbinden.

6. Vorrichtung nach Anspruch 4 oder 5, **dadurch gekennzeichnet, dass** der Gehäusering (213.1) umfangsseits einen radialen Vorsprung (213.1c) aufweist, mit dem der Gehäusering (213.1) im Verbindungsbereich zwischen dem dritten und dem vierten Gehäuseteil (201, 202) formschlüssig festgelegt ist.

7. Vorrichtung nach einem der Ansprüche 4 bis 6, **dadurch gekennzeichnet, dass** ein vierter Druckmittelanschluss (210) für einen alternativen ersten Druckmittelstrom (D1*) zur Beaufschlagung des im dritten Gehäuseteil (201) angeordneten zweiten Antriebskolbens (205) in einen vorgeschalteten vierten Druckmittelraum (200c*) im Bereich zwischen dem dritten Antriebskolben (206) und dem Gehäusering (213.1) einmündet, und dass der vorgeschaltete vierte Druckmittelraum (200c*) mit einem zwischen dem zweiten Antriebskolben (205) einerseits und dem Gehäusering (213.1) in Verbindung mit dem Zusatzkolben (206.1) andererseits gebildeten vierten Druckmittelraum (200c) über wenigstens einen Verbindungskanal (213.1d) verbunden ist, der in einem die zylindrische Ausnehmung (213.1 a) außenseits umfassenden Teil des Gehäuserings (213.1) angeordnet ist.

8. Vorrichtung nach einem der Ansprüche 1 bis 7, **dadurch gekennzeichnet, dass** die Endlagenbegrenzung des zweiten Antriebskolbens (205) für die erste Teiloffenstellung (T1) und jene des dritten Antriebskolbens (206; 206/206.1) für die zweite Teiloffenstellung (T2) durch einen am Gehäuse (201/202) zwischen den Antriebskolben (205, 206) fest angeordneten, beiderseits axial anfahrbaren Anschlagring (213) bzw. Gehäusering (213.1) erfolgt.

9. Vorrichtung nach einem der Ansprüche 2 bis 8, **dadurch gekennzeichnet, dass** der vierte Druckmittelraum (200c) mit einem ersten Druckmittelanschluss (7b) strömungsmäßig verbunden ist, der an einer im Anschluss an die Hauptverstelleinrichtung (100) angeordneten Steuereinrichtung (7) vorgesehen ist.

10. Vorrichtung nach einem der Ansprüche 2 oder 3 oder 8, **dadurch gekennzeichnet, dass** der vierte Druckmittelraum (200c) mit einem vierten Druckmittelanschluss (210) strömungsmäßig verbunden ist, der am Gehäuse (201/202) der Einzelverstelleinrichtungen (200) vorgesehen ist.

11. Vorrichtung nach Anspruch 9 oder 10, **dadurch gekennzeichnet, dass** der jeweilige Druckmittelanschluss (7b; 210) zusätzlich auch mit einem ersten Druckmittelraum (100a) der Hauptverstelleinrichtung (100) strömungsmäßig verbunden ist.

12. Vorrichtung nach einem der Ansprüche 1 bis 11, **dadurch gekennzeichnet, dass** die erste Antriebsstange (103) drehbeweglich gegenüber dem zweiten Antriebskolben (205) oder der mit diesem verbundenen zweiten Antriebsstange (203, 203a bzw. 203a*) angeordnet ist.

13. Vorrichtung nach Anspruch 12, **dadurch gekennzeichnet, dass** das stirnseitige Ende der ersten Antriebsstange (103) ein Kopfstück (103a) trägt, das in eine Ausnehmung (203b) innerhalb eines an der zweiten Antriebsstange (203) angeformten und gegenüber deren Durchmesser vergrößerten Kopfteils (203a bzw. 203a*) eingreift.

14. Vorrichtung nach Anspruch 13, **dadurch gekennzeichnet, dass** zwischen dem Kopfstück (103a) und der Ausnehmung (203b) eine Gleitlagerbuchse (212) angeordnet ist.

15. Vorrichtung nach einem der Ansprüche 1 bis 14, **dadurch gekennzeichnet, dass** die erste Verstellstange (3a) mit der zweiten Antriebsstange (203) im Bereich der zweiten Einzelverstelleinrichtung (200.2) verschraubt ist, dass eine Stellungsmeldestange (7a) vorgesehen ist, die die erste Antriebsstange (103, 103a) vollständig und die zweite Antriebsstange (203, 203a bzw. 203a*) bis zur ersten Verstellstange (3a) jeweils konzentrisch durchdringt, die einerseits in einer Steuereinrichtung (7) endet und andererseits mit ihrem stirnseitigen Ende in die zweite Antriebsstange (203) eingeschraubt ist und dabei mit ihrer zugeordneten zweiten Stirnfläche (7c) die Schraubverbindung zwischen Verstell- und Antriebsstange (3a, 203) an einer ersten Stirnfläche (3b) der ersten Verstellstange (3a) kontert.

16. Vorrichtung nach Anspruch 15, **dadurch gekennzeichnet, dass** die Stellungsmeldestange (7a) mit der ersten Antriebsstange (103), dem Kopfstück (103a), dem Kopfteil (203a; 203a*) und der zweiten Antriebsstange (203), die sie in der genannten Reihenfolge jeweils umschließen, einen durchgehenden Ringkanal (106) bildet, der sich über erste Querbohrungen (106a) in den ersten Druckmittelraum (100a) der Hauptverstelleinrichtung (100) und über zweite Querbohrungen (203c) in den vierten Druckmittelraum (200c) der Einzelverstelleinrichtungen (200) verzweigt.

17. Vorrichtung nach einem der Ansprüche 1 bis 16, **dadurch gekennzeichnet, dass** die Gehäuseteile (101, 102) der Hauptverstelleinrichtung (100) und jene (201, 202) der Einzelverstelleinrichtungen (200) aus formgleichen Gehäuserohteilen gefertigt sind.

18. Vorrichtung nach einem der Ansprüche 1 bis 17, **dadurch gekennzeichnet, dass** die Gehäuseteile (101, 102) der Hauptverstelleinrichtung (100) und jene (201, 202) der Einzelverstelleinrichtungen (200) jeweils miteinander stoffschlüssig verbunden sind.

19. Vorrichtung nach einem der Ansprüche 1 bis 18, **dadurch gekennzeichnet, dass** die Antriebskolben (104, 205, 206, 206/206.1) aus korrosionsbeständigem Leichtmetall bestehen.

## Claims

1. Device for actuating double seat valves, in particular for the food and beverage industry,
• with two independently moveable closing members (3, 4),
• which comprise amongst themselves a leak hollow area (5),
• which is connected with the surroundings of the double seat valve via at least one connecting path,
• with the independently driven first closing member (3) designed as a pusher piston,
• which takes its bearing after a partial lift on the independently driven second closing member (4) designed as a seat plate and transfers it during its further opening movement likewise into a full open position (H),
• with telescoping valve rods (3a, 203, 103; 4a, 204) on the side of the second closing member (4) leading out of the valve housing (1) towards the outside,
• via which the closing members (3, 4) can respectively be brought into a partial open position (T1, T2) in addition to the full open position (H) and independently of each other,
• wherein the opposing partial open positions (T1, T2) are generated by the individual adjusting devices (200; 200.1, 200.2) assigned to the respective closing members (3, 4)
• and the adjustment of the closing members (3, 4) takes place through pressurized drive piston (104, 205, 206 or respectively 206/206.1) acting on the adjusting rods (3a, 203; 4a, 204),
• wherein the third drive piston (206; 206/206.1) is mounted in an axially moveable manner on the second adjusting rod (4a, 204) designed as a hollow rod and surrounding the first adjusting rod (3a, 203) and can be brought into a catch connection with it in the direction of the second partial open position (T2)
• and wherein the second drive piston (205) can be pressurized on each of its two piston surfaces,
**characterized in that,**
• the second drive piston (205) of the first individual adjusting device (200.1) is permanently connected on one side with the first adjusting rod (3a, 203), which adjusts the first closing member (3),
• it is directly or indirectly mounted on the other side in an axially relocatable manner on a first drive rod (103) of a main adjusting device (100) and can be brought into a catch connection with it in the direction of the full open position (H),
• the full open position (H) is generated by pressurizing the main adjusting device (100) and the first individual adjusting device (200.1), wherein the second drive piston (205) of the first drive rod (103) follows in the corresponding power-supported tracking,
• and the individual adjusting devices (200; 200.1, 200.2) are designed independently and are added in between the main adjusting device (100) and the valve housing (1).

2. Device according to claim 1, **characterized in that**
• the individual adjusting devices (200; 200.1, 200.2) are arranged in a single housing (201/202) made up of two housing parts (201, 202) and there with its drive piston (205, 206 or 206/206.1),
• form three independently controllable pressurizing medium areas (200a, 200b, 200c or 200c/200c*),
• and the second pressurizing medium area (200a) is formed between the second drive piston (205) and the third housing part (201), the third pressurizing medium area (200b) between the third drive piston (206) and the fourth housing part (202) and the fourth pressurizing medium area (200c or 200c/200c*) between the two drive pistons (205, 206).

3. Device according to claim 1 or 2, **characterized in that** the first drive rod (103, 103a) of the main adjusting device (100) is led out of the latter in the direction of the individual adjusting devices (200; 200.1, 200.2) and is guided there in the front side of the second drive rod (203, 203a or 203a*) that is permanently connected with the first adjusting rod (3a) in an axially relocatable manner up to a stop surface (203d).

4. Device according to one of claims 1 through 3, **characterized in that** the third drive piston (206) is permanently but releasably connected with a diameter-smaller additional piston (206.1) on the side facing the second drive piston (205), that the additional piston (206.1) in cooperation with a housing ring (213.1) immobilized on the housing (201/202) of the individual adjusting devices (200) forms a fifth pressurizing medium area (200d), which is connected with a third pressurizing medium area (200b) formed between the third drive piston (206) and the fourth housing part (202), and that an additional force acting on the additional piston (206.1) results during supply of a third pressurizing medium flow (D3) to the third pressurizing medium area (200b) also additionally in the fifth pressurizing medium area (200d), which come together additively with a force acting on the third drive piston (206).

5. Device according to claim 4, **characterized in that** the additional piston (206.1) has a diameter-larger outer piston section (206.1a) and a diameter-smaller inner piston section (206.1b), that the inner piston section (206.1b) is sealed off from the third drive piston (206) on the front side and is screwed to it, that the outer piston section (206.1a) is sealed circumferentially from the shell of a cylindrical recess (213.1a) in the housing ring (213.1) and the inner piston section (206.1b) is sealed circumferentially in a coaxial through hole (213.1b) in the housing ring (213.1) and that a first pressurizing means channel (206b) is arranged in the connection area of the third drive piston (206) with the additional piston (206.1) in the former and a second pressurizing means channel (206.1d) is arranged in the latter, which correspond with each other and connect the third pressurizing means area (200b) and the fifth pressurizing means area (200d) in a manner that is permeable for the pressurizing means.

6. Device according to claim 4 or 5, **characterized in that** the housing ring (213.1) has a radial projection (213.1c) circumferentially, with which the housing ring (213.1) is immobilized positively in the connection area between the third and the fourth housing part (201,202).

7. Device according to one of claims 4 through 6, **characterized in that** a fourth pressurizing means connection (210) for an alternative first pressurizing means flow (D1*) for pressurization of the second drive piston (205) arranged in the third housing part (201) leads into an upstream fourth pressurizing means area (200c*) in the area between the third drive piston (206) and the housing ring (213.1) and that the upstream fourth pressurizing means area (200c*) is connected with a fourth pressurizing means area (200c) formed between the second drive piston (205) on one side and the housing ring (213.1) in connection with the additional piston (206.1) on the other side via at least one connection channel (213.1d), which is arranged in a part of the housing ring (213.1) comprising the cylindrical recess (213.1a) on the outside.

8. Device according to one of claims 1 through 7, **characterized in that** the end position boundary of the second drive piston (205) for the first partial open position (T1) and that of the third drive piston (206; 206/206.1) for the second partial open position (T2) takes place through a stop ring (213) or housing ring (213.1) that is permanently arranged on the housing (201/202) between the drive piston (205, 206) and that is axially approachable on both sides.

9. Device according to one of claims 2 through 8, **characterized in that** the fourth pressurizing means area (200c) is connected with a first pressurizing means connection (7b) in a flow-like manner, which is provided on a control device (7) arranged in the connection to the main adjusting device (100).

10. Device according to one of claims 2 or 3 or 8, **characterized in that** the fourth pressurizing means area (200c) is connected with a fourth pressurizing means connection (210) in a flow-like manner, which is provided on the housing (201/202) of the individual adjusting devices (200).

11. Device according to claim 9 or 10, **characterized in that** the respective pressurizing means connection (7b; 210) is also connected with a first pressurizing means area (100a) of the main adjusting device (100) in a flow-like manner.

12. Device according to one of claims 1 through 11, **characterized in that** the first drive rod (103) is arranged in a rotatable manner with respect to the second drive piston (205) or the second drive rod (203, 203a or 203a*) connected with it.

13. Device according to claim 12, **characterized in that** the front-side end of the first drive rod (103) carries a head piece (103a), which engages with a recess (203b) within a head part (203a or 203a*) arranged on the second drive rod (203) and enlarged with respect to its diameter.

14. Device according to claim 13, **characterized in that** a plain bearing bushing (212) is arranged between the head piece (103a) and the recess (203b).

15. Device according to one of claims 1 through 14, **characterized in that** the first adjusting rod (3a) is screwed with the second drive rod (203) in the area of the second individual adjusting device (200.2), that a position indicator rod (7a) is provided, which concentrically penetrates the first drive rod (103, 103a) completely and the second drive rod (203, 203a or 203a*) up to the first adjusting rod (3a) respectively, which ends on one side in a control device (7) and on the other side is screwed into the second drive rod (203) with its front-side end and thereby locks with its associated second front side (7c) the screw connection between the adjusting and drive rod (3a, 203) on a first front side (3b) of the first adjusting rod (3a).

16. Device according to claim 15, **characterized in that** the position indicator rod (7a) with the first drive rod (103), the head piece (103a), the head part (203a; 203a*) and the second drive rod (203), which they surround in the named order, form a continuous ring channel (106), which branches into the first pressurizing means area (100a) of the main adjusting device (100) via first transverse bore holes (106a) and into the fourth pressurizing means area (200c) of the individual adjusting devices (200) via second transverse bore holes (203c).

17. Device according to one of claims 1 through 16, **characterized in that** the housing parts (101, 102) of the main adjusting device (100) and those (201, 202) of the individual adjusting devices (200) are made of the same-shaped unfinished housing parts.

18. Device according to one of claims 1 through 17, **characterized in that** the housing parts (101, 102) of the main adjusting device (100) and those (201, 202) of the individual adjusting devices (200) are each connected with each other via a material connection.

19. Device according to one of claims 1 through 18, **characterized in that** the drive pistons (104, 205, 206, 206/206.1) are made of corrosion-resistant light metal.

## Revendications

1. Dispositif de commande de soupapes à double siège, en particulier pour l'industrie alimentaire et des boissons,
• avec deux éléments de fermeture (3, 4) mobiles indépendamment l'un de l'autre,
• qui renferment entre eux une cavité de vidange (5),
• qui est reliée par le biais d'au moins une voie de liaison à l'environnement de la soupape à double siège,
• avec le premier élément de fermeture (3) formé en tant que piston coulissant commandé indépendamment,
• qui, après une course partielle, vient en contact avec le second élément de fermeture (4) formé en tant que disque de siège, commandé de manière dépendante et transfère celui-ci dans la continuation de son mouvement d'ouverture également dans une position d'ouverture totale (H),
• avec des tiges de soupape (3a, 203, 103 ; 4a, 204) engagées les unes dans les autres de manière télescopique, guidées sur le côté du second élément de fermeture (4) d'un carter de soupape (1) vers l'extérieur,
• par le biais desquelles les éléments de fermeture (3, 4) en plus de la position d'ouverture totale (H) et indépendamment l'un de l'autre peuvent être amenés respectivement dans une position d'ouverture partielle (T1, T2),
• dans lequel les positions d'ouverture partielle (T1, T2) opposées sont générées par des dispositifs de réglage individuels (200 ; 200.1, 200.2) associés aux éléments de fermeture (3, 4) respectifs
• et le réglage des éléments de fermeture (3, 4) est effectué par des pistons de commande (104, 205, 206 respectivement 206/206.1) agissant sur les tiges de réglage (3a, 203 ; 4a, 204) et alimentés par un moyen de pression,
• dans lequel le troisième piston de commande (206 ; 206/206.1) est logé mobile axialement sur la seconde tige de réglage (4a, 204) formée en tant que tige creuse enfermant la première tige de réglage (3a, 203) et peut être amené dans une liaison d'entraînement avec celle-ci dans la direction de la seconde position d'ouverture partielle (T2)
• et dans lequel le second piston de commande (205) peut être alimenté par un moyen de pression sur chacune de ses deux surfaces de piston,
**caractérisé en ce que**
• le second piston de commande (205) du premier dispositif de réglage individuel (200.1) est d'une part relié fixement à la première tige de réglage (3a, 203) réglant le premier élément de fermeture (3),
• **en ce qu'**il est d'autre part logé mobile axialement directement ou indirectement sur une première tige de commande (103) d'un dispositif de réglage principal (100) et peut être amené dans une liaison d'entraînement avec celui-ci dans la direction de la position d'ouverture totale (H),
• **en ce que** la position d'ouverture totale (H) est générée par une alimentation en pression du dispositif de réglage principal (100) et du premier dispositif de réglage individuel (200.1), dans lequel le second piston de commande (205) suit la première tige de commande (103) dans la poursuite correspondante pour le renforcement de l'effort,
• et **en ce que** les dispositifs de réglage individuels (200 ; 200.1, 200.2) sont formés de manière autonome et sont insérés entre le dispositif de réglage principal (100) et le carter de soupape (1) de manière additive.

2. Dispositif selon la revendication 1, **caractérisé en ce que,**
• les dispositifs de réglage individuels (200 ; 200.1, 200.2) sont disposés dans un carter (201/202) unique constitué de deux pièces de carter (201, 202) et y forment avec leurs pistons de commande (205, 206 respectivement 206/206.1)
• trois espaces de moyen de pression (200a, 200b, 200c, respectivement 200c/200c*) pouvant être commandés indépendamment l'un de l'autre,
• et **en ce que** le second espace de moyen de pression (200a) est formé entre le second piston de commande (205) et la troisième pièce de carter (201), le troisième espace de moyen de pression (200b) entre le troisième piston de commande (206) et la quatrième pièce de carter (202) et le quatrième espace de moyen de pression (200c respectivement 200c/200c*) entre les deux pistons de commande (205, 206).

3. Dispositif selon la revendication 1 ou 2, **caractérisé en ce que** la première tige de commande (103, 103a) du dispositif de réglage principal (100) est guidée hors de celui-ci en direction des dispositifs de réglage individuels (200 ; 200.1, 200.2) et y est guidée mobile axialement dans la face frontale de la seconde tige de commande (203, 203a respectivement 203a*) reliée fixement à la première tige de réglage (3a) jusqu'à une surface de butée (203d).

4. Dispositif selon l'une des revendications 1 à 3, **caractérisé en ce que** le troisième piston de commande (206) sur son côté faisant face au second piston de commande (205) est relié à un piston supplémentaire (206.1) à diamètre inférieur fixement mais de manière détachable, **en ce que** le piston supplémentaire (206.1) forme dans la coopération avec un cercle d'emboîtage (213.1) fixé sur le carter (201/202) des dispositifs de réglage individuels (200) un cinquième espace de moyen de pression (200d) qui est relié à un troisième espace de moyen de pression (200b) formé entre le troisième piston de commande (206) et la quatrième pièce de carter (202), et **en ce qu'**il résulte lors de l'admission d'un troisième flux de moyen de pression (D3) vers le troisième espace de moyen de pression (200b) une force supplémentaire agissant également en outre dans le cinquième espace de moyen de pression (200d) sur le piston supplémentaire (206.1), qui se superpose en s'y ajoutant à une force agissant sur le troisième piston de commande (206).

5. Dispositif selon la revendication 4, **caractérisé en ce que** le piston supplémentaire (206.1) présente une section de piston externe (206.1a) à diamètre supérieur et une section de piston interne (206.1b) à diamètre inférieur, **en ce que** la section de piston interne (206.1b) est étanchéifiée côté frontal par rapport au troisième piston de commande (206) et est vissée avec celui-ci, **en ce que** la section de piston externe (206.1 a) est étanchéifiée côté périphérie par rapport à la surface latérale d'un évidement cylindrique (213.1a) dans le cercle d'emboîtage (213.1) et la section de piston interne (206.1b) côté périphérie est étanchéifiée dans un alésage traversant (213.1b) coaxial dans le cercle d'emboîtage (213.1), et **en ce que**, dans la zone de liaison entre le troisième piston de commande (206) et le piston supplémentaire (206.1), un premier canal de moyen de pression (206b) est disposé dans le premier et un second canal de moyen de pression (206.1d) est disposé dans le dernier, ceux-ci correspondant l'un avec l'autre et reliant le troisième espace de moyen de pression (200b) et le cinquième espace de moyen de pression (200d) l'un à l'autre de manière perméable au moyen de pression.

6. Dispositif selon la revendication 4 ou 5, **caractérisé en ce que** le cercle d'emboîtage (213.1) présente côté périphérie une saillie radiale (213.1c) avec laquelle le cercle d'emboîtage (213.1) est fixé par retenue mécanique dans la zone de liaison entre la troisième et la quatrième pièce de carter (201, 202).

7. Dispositif selon l'une des revendications 4 à 6, **caractérisé en ce qu'**un quatrième raccordement de moyen de pression (210) pour un premier flux de moyen de pression (D1*) alternatif pour l'alimentation du second piston de commande (205) disposé dans la troisième pièce de carter (201) débouche dans un quatrième espace de moyen de pression (200c*) en amont dans la zone entre le troisième piston de commande (206) et le cercle d'emboîtage (213.1), et **en ce que** le quatrième espace de moyen de pression (200c*) en amont est relié à un quatrième espace de moyen de pression (200c) formé entre le second piston de commande (205) d'une part et le cercle d'emboîtage (213.1) en liaison avec le piston supplémentaire (206.1) d'autre part par le biais d'au moins un canal de liaison (213.1d) qui est disposé dans une partie du cercle d'emboîtage (213.1) comprenant l'évidement cylindrique (213.1a) côté externe.

8. Dispositif selon l'une des revendication 1 à 7, **caractérisé en ce que** la délimitation des positions extrêmes du second piston de commande (205) pour la première position d'ouverture partielle (T1) et celle du troisième piston de commande (206 ; 206/206.1) pour la seconde position d'ouverture partielle (T2) est effectuée par un anneau de butée (213) et/ou cercle d'emboîtage (213.1) disposé fixement sur le carter (201/202) entre les pistons de commande (205, 206) pouvant être approché axialement des deux côtés.

9. Dispositif selon l'une des revendications 2 à 8**, caractérisé en ce que** le quatrième espace de moyen de pression (200c) est relié conformément au flux à un premier raccordement de moyen de pression (7b) qui est prévu sur un dispositif de commande (7) disposé à la suite du dispositif de réglage principal (100).

10. Dispositif selon l'une des revendications 2 ou 3 ou 8, **caractérisé en ce que** le quatrième espace de moyen de pression (200c) est relié conformément au flux à un quatrième raccordement de moyen de pression (210) qui est prévu sur le carter (201/202) des dispositifs de réglage individuels (200).

11. Dispositif selon la revendication 9 ou 10, **caractérisé en ce que** le raccordement de moyen de pression (7b ; 210) respectif est relié en outre également à un premier espace de moyen de pression (100a) du dispositif de réglage principal (100) conformément au flux.

12. Dispositif selon l'une des revendications 1 à 11, **caractérisé en ce que** la première tige de commande (103) est disposée mobile en rotation par rapport au second piston de commande (205) ou à la tige de commande (203, 203a respectivement 203a*) reliée à celui-ci.

13. Dispositif selon la revendication 12, **caractérisé en ce que** l'extrémité côté frontal de la première tige de commande (103) porte une partie de tête (103a) qui engrène dans un évidement (203b) à l'intérieur d'une pièce de tête (203a respectivement 203a*) formée sur la seconde tige de commande (203) et agrandie par rapport au diamètre de celle-ci.

14. Dispositif selon la revendication 13, **caractérisé en ce qu'**un coussinet lisse (212) est disposé entre la partie de tête (103a) et l'évidement (203b).

15. Dispositif selon l'une des revendications 1 à 14, **caractérisé en ce que** la première tige de réglage (3a) est vissée avec la seconde tige de commande (203) dans la zone du second dispositif de réglage individuel (200.2), **en ce qu'**une tige de contrôle de position (7a) est prévue qui pénètre dans la première tige de commande (103, 103a) complètement et dans la seconde tige de commande (203, 203a respectivement 203a*) jusqu'à la première tige de réglage (3a) de manière respectivement concentrique, qui d'une part se termine dans un dispositif de commande (7) et d'autre part est vissée avec son extrémité côté frontal dans la seconde tige de commande (203) et contre ainsi avec sa seconde surface frontale (7c) associée la liaison vissée entre la tige de réglage et la tige de commande (3a, 203) au niveau d'une première surface frontale (3b) de la première tige de réglage (3a).

16. Dispositif selon la revendication 15, **caractérisé en ce que** la tige de contrôle de position (7a) forme avec la première tige de commande (103), la partie de tête (103a), la pièce de tête (203a ; 203a*) et la seconde tige de commande (203), qui l'enferment respectivement dans l'ordre cité, un canal annulaire (106) continu qui se ramifie par le biais de premiers alésages latéraux (106a) dans le premier espace de moyen de pression (100a) du dispositif de réglage principal (100) et par le biais de seconds alésages latéraux (203c) dans le quatrième espace de moyen de pression (200c) des dispositifs de réglage individuels (200).

17. Dispositif selon l'une des revendications 1 à 16, **caractérisé en ce que** les pièces de carter (101, 102) du dispositif de réglage principal (100) et celles (201, 202) des dispositifs de réglage individuels (200) sont fabriquées à partir de pièces brutes de carter de forme identique.

18. Dispositif selon l'une des revendications 1 à 17, **caractérisé en ce que** les pièces de carter (101, 102) du dispositif de réglage principal (100) et celles (201, 202) des dispositifs de réglage individuels (200) sont reliées respectivement les unes aux autres par liaison de matière.

19. Dispositif selon l'une des revendications 1 à 18, **caractérisé en ce que** les pistons de commande (104, 205, 206, 206/206.1) sont constitués de métal léger résistant à la corrosion.
